# EUROPEAN PATENT APPLICATION

(11) **EP 4 475 596 A1**
(43) Date of publication of application: **11.12.2024**
(21) Application number: 23759185.4
(22) Date of filing: 21.02.2023
(51) Int. Cl.: H04W 36/24

(54) **SWITCHING METHOD AND RELATED DEVICES**

(30) Priority: 25.02.2022 CN 202210176609
(71) Applicant: Huawei Technologies Co., Ltd., Shenzhen, Guangdong 518129 (CN)
(72) Inventor: LIU, Zhe, Shenzhen, Guangdong 518129 (CN); PENG, Chenghui, Shenzhen, Guangdong 518129 (CN); WU, Jianjun, Shenzhen, Guangdong 518129 (CN)
(74) Representative: Gill Jennings & Every LLP
(86) International application number: PCT/CN2023/077509
(87) International publication number: WO 2023/160560

(57) **Abstract**

This application provides a handover method and an apparatus. The method includes: A first communication apparatus sends a first handover request message to a second communication apparatus, where the first handover request message is used to request to hand over from the first communication apparatus to a target communication apparatus, and the first handover request message includes execution information of a computing instance; and the first communication apparatus receives a first handover acknowledgment message determined based on the execution information of the computing instance, and sends first configuration information to a terminal based on the first handover acknowledgment message, so that the terminal hands over from the first communication apparatus to the target communication apparatus based on the first configuration. The execution information of the computing instance is used in a handover process to ensure continuity of a computing task during a handover.

## Description

This application claims priority to Chinese Patent Application No. 202210176609.9, filed with the China National Intellectual Property Administration on February 25, 2022 and entitled "HANDOVER METHOD AND RELATED APPARATUS", which is incorporated herein by reference in its entirety.

### TECHNICAL FIELD

This application relates to the field of communication technologies, and in particular, to a handover method and a related apparatus.

### BACKGROUND

As commercial deployment and industry applications of mobile communication networks emerge, convergence of computing resources (also referred to as computing power (computing power)) and wireless networks has become an important development trend. The European Telecommunications Standards Institute (European telecommunications standards institute, ETSI) has released standards related to mobile/multi-access edge computing (mobile/multi-access edge computing, MEC). The MEC can be considered as a cloud server that runs at an edge of a mobile network and runs a specific task, and can provide a cloud computing capability for users on a radio access network (radio access network, RAN) close to a terminal. For MEC deployment, computing power is deployed in an area close to the terminal and the computing power is introduced to the radio access network. This meets the industry's requirements for real-time quality and data security to some extent, but still needs to be further optimized.

In a current network, service deployment related to computing power is implemented by a management plane, and is independent of a network connection. Consequently, there are problems such as a large adjustment delay and weak dynamic performance, and it is difficult to support a service in which computing and communication are deeply coupled. In addition, an existing mobility management mechanism possibly cannot ensure continuity of a computing task.

### SUMMARY

Embodiments of this application provide a handover method and a related apparatus, to ensure continuity of a computing task during a handover.

According to a first aspect, an embodiment of this application provides a handover method. The method includes: A first communication apparatus sends a first handover request message to a second communication apparatus, where the first handover request message is used to request a terminal to hand over from the first communication apparatus to a target communication apparatus, and the first handover request message includes execution information of a computing instance. The second communication apparatus sends a first handover acknowledgment message, where the first handover acknowledgment message is determined based on the execution information of the computing instance. The first communication apparatus receives the first handover acknowledgment message, and sends first configuration information to the terminal based on the first handover acknowledgment message. The terminal hands over from the first communication apparatus to the target communication apparatus based on the first configuration information, and sends configuration complete information to the target communication apparatus.

In the method, the execution information of the computing instance is used in a handover process, the handover acknowledgment message is determined based on the execution information of the computing instance, and the configuration information is sent to the terminal based on the handover acknowledgment message, so that the terminal hands over from the first communication apparatus to the target communication apparatus. This ensures continuity of a computing task during a handover.

In a possible implementation, the first handover acknowledgment message indicates to perform computing and connection handovers, or the first handover acknowledgment message indicates to perform a connection handover.

The computing and connection handovers may mean that the handover process from the first communication apparatus to the target communication apparatus includes both a connection-related handover and a computing-related handover (or referred to as migration). To be specific, after the handover, the terminal establishes a communication connection to the target communication apparatus, and receives a computing service provided by the target communication apparatus. The connection handover may mean that the handover process from the first communication apparatus to the target communication apparatus includes a connection handover. To be specific, after the handover, the terminal establishes a communication connection to the target communication apparatus, and receives, through the communication connection to the target communication apparatus, a computing service provided by the first communication apparatus.

In a possible implementation, the execution information of the computing instance includes computing resource requirement information of the computing instance, and the first handover acknowledgment message is determined based on the computing resource requirement information of the computing instance and computing power resource information of the target communication apparatus.

Optionally, the computing resource requirement information includes a computing resource requirement level. Optionally, the computing resource requirement level may be represented by one or more of requirement levels of a computing resource container, a processor, storage, an internal memory, or an amount of electricity. The computing resource container may be a combination of one or more of resources such as a quantity of processors, a storage size, an internal memory size, and an amount of electricity.

In this implementation, the first handover acknowledgment message is determined based on a computing resource requirement and computing power resources of the target communication apparatus, to avoid a computing interruption due to limited computing power of the target communication apparatus, and ensure computing continuity.

In a possible implementation, the execution information of the computing instance further includes one or more of the following: cell identity information of the first communication apparatus, identification information of the terminal, execution progress information of the computing instance, input/output communication overheads information of the computing instance, or model size information of the computing instance.

The execution progress information of the computing instance may be represented by a percentage. The input/output communication overheads information of the computing instance indicates communication overheads for transmitting computing-related input/output information. For example, the communication overheads may be represented by a quantity of bytes occupied by a computing-related parameter. The model size information of the computing instance indicates a parameter quantity of a model used by the computing instance. For example, the parameter quantity may be represented by a quantity of bytes occupied after a model parameter is quantized.

In this implementation, the second communication apparatus can select a handover policy more accurately based on parameters in a plurality of dimensions such as the execution progress information, the communication overheads information, and the model size information that are included in the execution information of the computing instance.

In a possible implementation, the second communication apparatus is the target communication apparatus. In this implementation, the target communication apparatus has a computing management function, and may determine the first handover acknowledgment message based on the execution information of the computing instance and the local computing power resource information.

In a possible implementation, the second communication apparatus is a computing management function CMF entity, and the method further includes: The second communication apparatus sends a computing power resource obtaining request to the target communication apparatus, where the computing power resource obtaining request is used to request the computing power resource information of the target communication apparatus. The second communication apparatus receives a computing power resource obtaining response sent by the target communication apparatus, where the computing power resource obtaining response includes the computing power resource information of the target communication apparatus.

In this implementation, the computing management function CMF obtains the computing power resource information of the target communication apparatus from the target communication apparatus, to determine the first handover acknowledgment message based on the computing power resource information of the target communication apparatus, and select an appropriate handover policy to ensure computing continuity.

In a possible implementation, the second communication apparatus is a computing management function CMF entity, and the method further includes: The second communication apparatus sends a second handover request message to the target communication apparatus, where the second handover request message includes the first handover request message and a cell identity of the first communication apparatus. The second communication apparatus receives a second handover acknowledgment message sent by the target communication apparatus, where the second handover acknowledgment message is determined based on the execution information of the computing instance and the local computing power resource information of the target communication apparatus. The second communication apparatus determines the first handover acknowledgment message based on the second handover acknowledgment message.

In this implementation, the computing management function CMF forwards the first handover request to the target communication apparatus, so that the target communication apparatus selects an appropriate handover policy based on the local computing power resource information to ensure computing continuity.

In a possible implementation, when computing power resources of the target communication apparatus meet a computing resource requirement of the computing instance, the first handover acknowledgment message indicates to perform computing and connection handovers.

In this implementation, computing and connection handovers are performed only when the computing power resources of the target communication apparatus meet the computing resource requirement of the computing instance. This avoids a computing interruption due to limited computing power resources of the target communication apparatus, and can ensure computing continuity.

In a possible implementation, when computing power resources of the target communication apparatus meet a computing resource requirement of the computing instance, and communication overheads of a computing handover are less than or equal to a first threshold and/or an execution progress of the computing instance is less than or equal to a second threshold, the first handover acknowledgment message indicates to perform computing and connection handovers.

In this implementation, on a premise that computing power of the target communication apparatus meets the requirement, the handover policy is further determined based on the communication overheads of the computing handover and/or the execution progress of the computing instance, to improve computing service efficiency.

In a possible implementation, when computing power resources of the target communication apparatus meet a computing resource requirement of the computing instance, and the target communication apparatus can meet a computing quality of service QoS requirement, the first handover acknowledgment message indicates to perform computing and connection handovers.

In this implementation, on a premise that computing power of the target communication apparatus meets the requirement, the handover policy is further determined based on the computing QoS requirement, to ensure that computing quality of service meets a requirement.

In a possible implementation, the first handover acknowledgment message includes second configuration information and third configuration information. The second configuration information indicates connection configuration information of the terminal, and the third configuration information indicates a computing-related configuration of the terminal.

The computing-related configuration of the terminal may include computing environment configuration information of the terminal and configuration information of the computing instance of the terminal.

In this implementation, the connection configuration information of the terminal is used by the terminal to establish the communication connection to the target communication apparatus, and the computing-related configuration of the terminal is used by the terminal to reconfigure a computing environment and/or a computing instance. The first communication apparatus may send the first configuration information to the terminal based on the handover acknowledgment message, to implement connection and computing handovers.

In a possible implementation, the first configuration information includes the connection configuration information of the terminal and the computing-related configuration information of the terminal.

In this implementation, the first communication apparatus indicates the connection configuration information of the terminal and the computing-related configuration information of the terminal to the terminal based on the first handover acknowledgment message, so that the terminal hands over from the first communication apparatus to the target communication apparatus based on these configurations. Specifically, the terminal establishes the communication connection to the target communication apparatus based on the connection configuration information of the terminal, establishes a computing bearer, and reconfigures the computing environment and/or the computing instance, to receive the computing service provided by the target communication apparatus.

In a possible implementation, after the connection and computing handovers are completed, the terminal sends a computing input to the target communication apparatus; and the target communication apparatus performs computing based on the computing input to obtain a computing output, and sends the computing output to the terminal.

In this implementation, after the connection and computing handovers are completed, the terminal interacts with the target communication apparatus about the computing input and the computing output, to ensure computing continuity.

In a possible implementation, when computing power resources of the target communication apparatus do not meet a computing resource requirement of the computing instance, the first handover acknowledgment message indicates to perform a connection handover.

In this implementation, when the computing power resources of the target communication apparatus do not meet the computing resource requirement of the computing instance, a connection handover is performed. After the handover, the terminal may establish the communication connection to the target communication apparatus, and receive, by using the target communication apparatus, the computing service provided by the first communication apparatus, to ensure computing continuity in case of the limited computing power resources.

In a possible implementation, when communication overheads of a computing handover are greater than or equal to a first threshold, or an execution progress of the computing instance is greater than or equal to a second threshold, the first handover acknowledgment message indicates to perform a connection handover.

In this implementation, when the communication overheads of the computing handover are excessively high, or when execution of the current computing instance is to be completed, a connection handover is performed. The first communication apparatus provides the computing service, and the terminal obtains the computing service of the first communication apparatus through the communication connection to the target communication apparatus. This reduces signaling overheads and a handover delay, and improves computing service efficiency.

In a possible implementation, when the target communication apparatus cannot meet a computing QoS requirement, the first handover acknowledgment message indicates to perform a connection handover.

In this implementation, when the target communication apparatus cannot meet the computing QoS requirement, a connection handover is performed, and the first communication apparatus continues providing the computing service, to ensure computing quality of service.

In a possible implementation, the first handover acknowledgment information includes second configuration information and fourth configuration information. The second configuration information is connection configuration information of the terminal, and the fourth configuration information is information about a connection configuration between the first communication apparatus and the target communication apparatus.

Optionally, the fourth configuration information includes information about establishing a computing plane channel, and the computing plane channel is used to transmit computing-related input/output information.

In this implementation, the connection configuration information of the terminal is used by the terminal to establish the communication connection to the target communication apparatus, and the connection configuration between the first communication apparatus and the target communication apparatus is used to transmit the computing-related input/output information, so that the terminal continues obtaining the computing service of the first communication apparatus by using the target communication apparatus.

In a possible implementation, the first configuration information includes the connection configuration information of the terminal.

In this implementation, the first communication apparatus indicates the first configuration information to the terminal based on the first handover acknowledgment message, so that the terminal hands over from the first communication apparatus to the target communication apparatus based on the first configuration information. Specifically, the terminal establishes the communication connection to the target communication apparatus based on the second configuration information, to continue receiving, by using the target communication apparatus, the computing service provided by the first communication apparatus.

In a possible implementation, the connection configuration information of the terminal includes one or more of the following: a random access preamble and computing bearer configuration information.

In this implementation, after receiving the second configuration information, the terminal may be connected to the target communication apparatus based on the random access preamble to establish the communication connection to the target communication apparatus, and establish a computing bearer with the target communication apparatus based on the computing bearer configuration information. The computing bearer is used to exchange computing-related information to ensure computing continuity.

In a possible implementation, after the connection handover is completed, the terminal sends a computing input to the target communication apparatus; the target communication apparatus sends the computing input to the first communication apparatus; the first communication apparatus performs computing based on the computing input to obtain a computing output, and sends the computing output to the target communication apparatus; and the target communication apparatus sends the computing output to the terminal.

In this implementation, after the connection handover is completed, the terminal interacts, by using the target communication apparatus, with the first communication apparatus about the computing input and the computing output, to ensure computing continuity.

In a possible implementation, before the first communication apparatus sends the first handover request to the second communication apparatus, the terminal sends handover suggestion information to the first communication apparatus, and the first communication apparatus sends the first handover request to the second communication apparatus based on the computing handover suggestion information.

Optionally, the terminal sends the computing handover suggestion information when a trigger event occurs. The trigger event may be that computing resources of the terminal are limited, current computing quality of service is lower than or equal to a fourth threshold, quality of communication between the terminal and the first communication apparatus is lower than or equal to a fifth threshold, or the like.

In this implementation, the terminal may proactively suggest a handover based on the local computing resources, the current computing quality of service, the quality of communication, or the like, to obtain a better computing service.

According to a second aspect, an embodiment of this application provides a handover method. The method includes: A first communication apparatus sends a first handover request message to a second communication apparatus, where the first handover request message is used to request a terminal to hand over from the first communication apparatus to a target communication apparatus, and the first handover request message includes execution information of a computing instance; receives a first handover acknowledgment message, where the first handover acknowledgment message is determined based on the execution information of the computing instance; and sends first configuration information to the terminal based on the first handover acknowledgment message.

In the method, the first communication apparatus uses the execution information of the computing instance in a handover request, receives the handover acknowledgment message determined based on the execution information of the computing instance, and sends the configuration information to the terminal based on the handover acknowledgment message determined based on the execution information of the computing instance, so that the terminal hands over from the first communication apparatus to the target communication apparatus. This ensures continuity of a computing task during a handover.

In a possible implementation, the first handover acknowledgment message indicates to perform computing and connection handovers, or the first handover acknowledgment message indicates to perform a connection handover.

The computing and connection handovers may mean that a handover process from the first communication apparatus to the target communication apparatus includes both a connection-related handover and a computing-related handover (or referred to as migration). To be specific, after the handover, the terminal establishes a communication connection to the target communication apparatus, and receives a computing service provided by the target communication apparatus. The connection handover may mean that a handover process from the first communication apparatus to the target communication apparatus includes a connection handover. To be specific, after the handover, the terminal establishes a communication connection to the target communication apparatus, and receives, through the communication connection to the target communication apparatus, a computing service provided by the first communication apparatus.

In a possible implementation, the execution information of the computing instance includes computing resource requirement information of the computing instance, and the first handover acknowledgment message is determined based on the computing resource requirement information of the computing instance and computing power resource information of the target communication apparatus.

Optionally, the computing resource requirement information includes a computing resource requirement level. Optionally, the computing resource requirement level may be represented by one or more of requirement levels of a computing resource container, a processor, storage, an internal memory, or an amount of electricity. The computing resource container may be a combination of one or more of resources such as a quantity of processors, a storage size, an internal memory size, and an amount of electricity.

In a possible implementation, the execution information of the computing instance further includes one or more of the following: cell identity information of the first communication apparatus, identification information of the terminal, execution progress information of the computing instance, input/output communication overheads information of the computing instance, or model size information of the computing instance.

The execution progress information of the computing instance may be represented by a percentage. The input/output communication overheads information of the computing instance indicates communication overheads for transmitting computing-related input/output information. For example, the communication overheads may be represented by a quantity of bytes occupied by a computing-related parameter. The model size information of the computing instance indicates a parameter quantity of a model used by the computing instance. For example, the parameter quantity may be represented by a quantity of bytes occupied after a model parameter is quantized.

In a possible implementation, when computing power resources of the target communication apparatus meet a computing resource requirement of the computing instance, the first handover acknowledgment message indicates to perform computing and connection handovers.

In this implementation, computing and connection handovers are performed only when the computing power resources of the target communication apparatus meet the computing resource requirement of the computing instance. This avoids a computing interruption due to limited computing power resources of the target communication apparatus, and can ensure computing continuity.

In a possible implementation, when computing power resources of the target communication apparatus meet a computing resource requirement of the computing instance, and communication overheads of a computing handover are less than or equal to a first threshold and/or an execution progress of the computing instance is less than or equal to a second threshold, the first handover acknowledgment message indicates to perform computing and connection handovers.

In a possible implementation, when computing power resources of the target communication apparatus meet a computing resource requirement of the computing instance, and the target communication apparatus can meet a computing QoS requirement, the first handover acknowledgment message indicates to perform computing and connection handovers.

In a possible implementation, the first handover acknowledgment message includes second configuration information and third configuration information. The second configuration information indicates connection configuration information of the terminal, and the third configuration information indicates a computing-related configuration of the terminal.

The computing-related configuration of the terminal may include computing environment configuration information of the terminal and configuration information of the computing instance of the terminal.

In a possible implementation, the first configuration information includes the connection configuration information of the terminal and the computing-related configuration information of the terminal.

In a possible implementation, when computing power resources of the target communication apparatus do not meet a computing resource requirement of the computing instance, the first handover acknowledgment message indicates to perform a connection handover.

In a possible implementation, when communication overheads of a computing handover are greater than or equal to a first threshold, or an execution progress of the computing instance is greater than or equal to a second threshold, the first handover acknowledgment message indicates to perform a connection handover.

In a possible implementation, when the target communication apparatus cannot meet a computing QoS requirement, the first handover acknowledgment message indicates to perform a connection handover.

In a possible implementation, the first handover acknowledgment information includes second configuration information and fourth configuration information. The second configuration information is connection configuration information of the terminal, and the fourth configuration information is information about a connection configuration between the first communication apparatus and the target communication apparatus.

Optionally, the fourth configuration information includes information about establishing a computing plane channel, and the computing plane channel is used to transmit computing-related input/output information.

In a possible implementation, the first configuration information includes the connection configuration information of the terminal.

In a possible implementation, the connection configuration information of the terminal includes one or more of the following: a random access preamble and computing bearer configuration information.

In a possible implementation, before sending the first handover request to the second communication apparatus, the first communication apparatus receives handover suggestion information sent by the terminal, and sends the first handover request to the second communication apparatus based on the computing handover suggestion information.

In this implementation, the handover request is initiated based on the handover suggestion information sent by the terminal, to provide a better computing service for the terminal depending on a requirement of the terminal.

According to a third aspect, an embodiment of this application provides a handover method. The method includes: A second communication apparatus receives a first handover request message, where the first handover request message is used to request a terminal to hand over from a first communication apparatus to a target communication apparatus, and the first handover request message includes execution information of a computing instance. The second communication apparatus sends a first handover acknowledgment message, where the first handover acknowledgment message is determined based on the execution information of the computing instance.

In the method, the second communication apparatus receives the handover request including the execution information of the computing instance, and sends the handover acknowledgment message determined based on the execution information of the computing instance to the first communication apparatus, so that the terminal hands over from the first communication apparatus to the target communication apparatus. This ensures continuity of a computing task during a handover.

In a possible implementation, the first handover acknowledgment message indicates to perform computing and connection handovers, or the first handover acknowledgment message indicates to perform a connection handover.

The computing and connection handovers may mean that a handover process from the first communication apparatus to the target communication apparatus includes both a connection-related handover and a computing-related handover (or referred to as migration). To be specific, after the handover, the terminal establishes a communication connection to the target communication apparatus, and receives a computing service provided by the target communication apparatus. The connection handover may mean that a handover process from the first communication apparatus to the target communication apparatus includes a connection handover. To be specific, after the handover, the terminal establishes a communication connection to the target communication apparatus, and receives, through the communication connection to the target communication apparatus, a computing service provided by the first communication apparatus.

In a possible implementation, the execution information of the computing instance includes computing resource requirement information of the computing instance, and the first handover acknowledgment message is determined based on the computing resource requirement information of the computing instance and computing power resource information of the target communication apparatus.

Optionally, the computing resource requirement information includes a computing resource requirement level. Optionally, the computing resource requirement level may be represented by one or more of requirement levels of a computing resource container, a processor, storage, an internal memory, or an amount of electricity. The computing resource container may be a combination of one or more of resources such as a quantity of processors, a storage size, an internal memory size, and an amount of electricity.

In a possible implementation, the execution information of the computing instance further includes one or more of the following: cell identity information of the first communication apparatus, identification information of the terminal, execution progress information of the computing instance, input/output communication overheads information of the computing instance, or model size information of the computing instance.

The execution progress information of the computing instance may be represented by a percentage. The input/output communication overheads information of the computing instance indicates communication overheads for transmitting computing-related input/output information. For example, the communication overheads may be represented by a quantity of bytes occupied by a computing-related parameter. The model size information of the computing instance indicates a parameter quantity of a model used by the computing instance. For example, the parameter quantity may be represented by a quantity of bytes occupied after a model parameter is quantized.

In a possible implementation, the second communication apparatus is the target communication apparatus. In this implementation, the target communication apparatus has a computing management function, and may determine the first handover acknowledgment message based on the execution information of the computing instance and the local computing power resource information.

In a possible implementation, the second communication apparatus is a computing management function CMF entity, and the method further includes: The second communication apparatus sends a computing power resource obtaining request to the target communication apparatus, where the computing power resource obtaining request is used to request the computing power resource information of the target communication apparatus. The second communication apparatus receives a computing power resource obtaining response sent by the target communication apparatus, where the computing power resource obtaining response includes the computing power resource information of the target communication apparatus.

In a possible implementation, the second communication apparatus is a computing management function CMF entity, and the method further includes: The second communication apparatus sends a second handover request message to the target communication apparatus, where the second handover request message includes the first handover request message and a cell identity of the first communication apparatus. The second communication apparatus receives a second handover acknowledgment message sent by the target communication apparatus, where the second handover acknowledgment message is determined based on the execution information of the computing instance and the local computing power resource information of the target communication apparatus. The second communication apparatus determines the first handover acknowledgment message based on the second handover acknowledgment message.

In a possible implementation, when computing power resources of the target communication apparatus meet a computing resource requirement of the computing instance, the first handover acknowledgment message indicates to perform computing and connection handovers.

In a possible implementation, when computing power resources of the target communication apparatus meet a computing resource requirement of the computing instance, and communication overheads of a computing handover are less than or equal to a first threshold and/or an execution progress of the computing instance is less than or equal to a second threshold, the first handover acknowledgment message indicates to perform computing and connection handovers.

In a possible implementation, when computing power resources of the target communication apparatus meet a computing resource requirement of the computing instance, and the target communication apparatus can meet a computing QoS requirement, the first handover acknowledgment message indicates to perform computing and connection handovers.

In a possible implementation, the first handover acknowledgment message includes second configuration information and third configuration information. The second configuration information indicates a connection configuration of the terminal, and the third configuration information indicates a computing-related configuration of the terminal.

The computing-related configuration of the terminal may include computing environment configuration information of the terminal and configuration information of the computing instance of the terminal.

In a possible implementation, the first configuration information includes the connection configuration information of the terminal and the computing-related configuration information of the terminal.

In a possible implementation, after the connection and computing handovers are completed, the terminal sends a computing input to the target communication apparatus; and the target communication apparatus performs computing based on the computing input to obtain a computing output, and sends the computing output to the terminal.

In a possible implementation, when computing power resources of the target communication apparatus do not meet a computing resource requirement of the computing instance, the first handover acknowledgment message indicates to perform a connection handover.

In a possible implementation, when communication overheads of a computing handover are greater than or equal to a first threshold, or an execution progress of the computing instance is greater than or equal to a second threshold, the first handover acknowledgment message indicates to perform a connection handover.

In a possible implementation, when the target communication apparatus cannot meet a computing QoS requirement, the first handover acknowledgment message indicates to perform a connection handover.

In a possible implementation, the first handover acknowledgment information includes second configuration information and fourth configuration information. The second configuration information is connection configuration information of the terminal, and the fourth configuration information is information about a connection configuration between the first communication apparatus and the target communication apparatus.

Optionally, the fourth configuration information includes information about establishing a computing plane channel, and the computing plane channel is used to transmit computing-related input/output information.

In a possible implementation, the first configuration information includes the connection configuration information of the terminal.

In a possible implementation, the connection configuration information of the terminal includes one or more of the following: a random access preamble and computing bearer configuration information.

In a possible implementation, after the connection handover is completed, the terminal sends a computing input to the target communication apparatus; the target communication apparatus sends the computing input to the first communication apparatus; the first communication apparatus performs computing based on the computing input to obtain a computing output, and sends the computing output to the target communication apparatus; and the target communication apparatus sends the computing output to the terminal.

In a possible implementation, before the first communication apparatus sends the first handover request to the second communication apparatus, the terminal sends handover suggestion information to the first communication apparatus, and the first communication apparatus sends the first handover request based on the computing handover suggestion information.

Optionally, the terminal sends the computing handover suggestion information when a trigger event occurs. The trigger event may be that computing resources of the terminal are limited, current computing quality of service is lower than or equal to a fourth threshold, quality of communication between the terminal and the first communication apparatus is lower than or equal to a fifth threshold, or the like.

According to a fourth aspect, an embodiment of this application provides a handover method. The method includes: A terminal receives first configuration information sent by a first communication apparatus, where the first configuration information is determined based on a first handover acknowledgment message, and the first handover acknowledgment message is determined based on execution information of a computing instance. The terminal hands over from the first communication apparatus to a target communication apparatus based on the first configuration information, and sends configuration complete information to the target communication apparatus.

In the method, the first configuration information received by the terminal is related to the execution information of the computing instance. The terminal hands over from the first communication apparatus to the target communication apparatus based on the first configuration information. The execution information of the computing instance is used in a handover process, to ensure continuity of a computing task during a handover.

In a possible implementation, the first handover acknowledgment message indicates to perform computing and connection handovers, or the first handover acknowledgment message indicates to perform a connection handover.

The computing and connection handovers may mean that the handover process from the first communication apparatus to the target communication apparatus includes both a connection-related handover and a computing-related handover (or referred to as migration). To be specific, after the handover, the terminal establishes a communication connection to the target communication apparatus, and receives a computing service provided by the target communication apparatus. The connection handover may mean that the handover process from the first communication apparatus to the target communication apparatus includes a connection handover. To be specific, after the handover, the terminal establishes a communication connection to the target communication apparatus, and receives, through the communication connection to the target communication apparatus, a computing service provided by the first communication apparatus.

In a possible implementation, the first configuration information includes connection configuration information of the terminal and computing-related configuration information of the terminal. The computing-related configuration information of the terminal may include computing environment configuration information of the terminal and configuration information of the computing instance of the terminal.

In a possible implementation, after the terminal hands over to the target communication apparatus, the terminal sends computing input information to the target communication apparatus, and receives computing output information that is obtained by the target communication apparatus by performing computing based on the computing input information.

In a possible implementation, the first configuration information includes connection configuration information of the terminal.

In a possible implementation, after the terminal hands over to the target communication apparatus, the terminal sends computing input information to the target communication apparatus, and receives, from the target communication apparatus, computing output information that is obtained by the first communication apparatus by performing computing.

In a possible implementation, the connection configuration information of the terminal includes one or more of the following: a random access preamble and computing bearer configuration information.

In a possible implementation, the terminal sends handover suggestion information to the first communication apparatus, so that the first communication apparatus sends a first handover request to a second communication apparatus based on the computing handover suggestion information.

Optionally, the terminal sends the computing handover suggestion information when a trigger event occurs. The trigger event may be that computing resources of the terminal are limited, current computing quality of service is lower than or equal to a fourth threshold, quality of communication between the terminal and the first communication apparatus is lower than or equal to a fifth threshold, or the like.

For beneficial effects of the methods in the second aspect, the third aspect, the fourth aspect, and the possible implementations of the second aspect, the third aspect, and the fourth aspect, refer to the first aspect and the possible implementations of the first aspect. Details are not described herein again.

According to a fifth aspect, an embodiment of this application further provides a communication apparatus. The communication apparatus may be used as the first communication apparatus according to the first aspect or the second aspect. The communication apparatus may be an access network device, an apparatus (for example, a chip, a chip system, or a circuit) in an access network device, or an apparatus that can be used together with an access network device.

In a possible implementation, the communication apparatus may include modules or units that are in one-to-one correspondence with the methods/operations/steps/actions described in the second aspect. The module or unit may be a hardware circuit or software, or may be implemented by a hardware circuit in combination with software.

In a possible implementation, the communication apparatus may include a processing unit and a transceiver unit. The processing unit is configured to invoke the transceiver unit to perform a receiving function and/or a sending function. For example, the transceiver unit is configured to send a first handover request message, where the first handover request message is used to request a terminal to hand over from the first communication apparatus to a target communication apparatus, and the first handover request message includes execution information of a computing instance; is further configured to receive a first handover acknowledgment message, where the first handover acknowledgment message is determined based on the execution information of the computing instance; and is further configured to send first configuration information to the terminal based on the first handover acknowledgment message.

In a possible implementation, the transceiver unit is further configured to: receive handover suggestion information sent by the terminal, and send the first handover request based on the computing handover suggestion information.

In a possible implementation, the processing unit is a processor, and the transceiver unit is a transceiver.

According to a sixth aspect, an embodiment of this application further provides a communication apparatus. The communication apparatus may be used as the second communication apparatus according to the third aspect. The communication apparatus may be a network device, an apparatus (for example, a chip, a chip system, or a circuit) in a network device, or an apparatus that can be used together with a network device.

In a possible implementation, the communication apparatus may include modules or units that are in one-to-one correspondence with the methods/operations/steps/actions described in the third aspect. The module or unit may be a hardware circuit or software, or may be implemented by a hardware circuit in combination with software.

In a possible implementation, the communication apparatus may include a processing unit and a transceiver unit. The processing unit is configured to invoke the transceiver unit to perform a receiving function and/or a sending function. For example, the transceiver unit is configured to receive a first handover request message, where the first handover request message is used to request a terminal to hand over from a first communication apparatus to a target communication apparatus, and the first handover request message includes execution information of a computing instance; and is further configured to send a first handover acknowledgment message, where the first handover acknowledgment message is determined based on the execution information of the computing instance.

In a possible implementation, the communication apparatus is the target communication apparatus, the communication apparatus has a computing management function, and the processing unit is further configured to determine the first handover acknowledgment message based on the execution information of the computing instance and local computing power resource information.

In a possible implementation, the communication apparatus is a computing management function CMF entity, and the transceiver unit is further configured to send a computing power resource obtaining request to the target communication apparatus, where the computing power resource obtaining request is used to request computing power resource information of the target communication apparatus; and is further configured to receive a computing power resource obtaining response sent by the target communication apparatus, where the computing power resource obtaining response includes the computing power resource information of the target communication apparatus.

In a possible implementation, the communication apparatus is a computing management function CMF entity, and the transceiver unit is further configured to send a second handover request message to the target communication apparatus, where the second handover request message includes the first handover request message and a cell identity of the first communication apparatus; and is further configured to receive a second handover acknowledgment message sent by the target communication apparatus, where the second handover acknowledgment message is determined based on the execution information of the computing instance and local computing power resource information of the target communication apparatus. The processing unit is further configured to determine the first handover acknowledgment message based on the second handover acknowledgment message.

According to a seventh aspect, an embodiment of this application further provides a communication apparatus. The communication apparatus may be used as the terminal according to the fourth aspect. The communication apparatus may be a terminal device, an apparatus (for example, a chip, a chip system, or a circuit) in a terminal device, or an apparatus that can be used together with a terminal device.

In a possible implementation, the communication apparatus may include modules or units that are in one-to-one correspondence with the methods/operations/steps/actions described in the fourth aspect. The module or unit may be a hardware circuit or software, or may be implemented by a hardware circuit in combination with software.

In a possible implementation, the communication apparatus may include a processing unit and a transceiver unit. The processing unit is configured to invoke the transceiver unit to perform a receiving function and/or a sending function. For example, the transceiver unit is configured to receive first configuration information sent by a first communication apparatus, where the first configuration information is determined based on a first handover acknowledgment message, and the first handover acknowledgment message is determined based on execution information of a computing instance. The processing unit is configured to hand over from the first communication apparatus to a target communication apparatus based on the first configuration information. The transceiver unit is further configured to send configuration complete information to the target communication apparatus.

In a possible implementation, the transceiver unit is further configured to: send computing input information to the target communication apparatus, and receive computing output information that is obtained by the target communication apparatus by performing computing based on the computing input information.

In a possible implementation, the transceiver unit is further configured to: send computing input information to the target communication apparatus, and receive, from the target communication apparatus, computing output information that is obtained by the first communication apparatus by performing computing.

In a possible implementation, the transceiver unit is further configured to send handover suggestion information to the first communication apparatus, so that the first communication apparatus sends a first handover request to a second communication apparatus based on the computing handover suggestion information.

Optionally, the transceiver unit is specifically configured to send the computing handover suggestion information when a trigger event occurs. The trigger event may be that computing resources of the terminal are limited, current computing quality of service is lower than or equal to a fourth threshold, quality of communication between the terminal and the first communication apparatus is lower than or equal to a fifth threshold, or the like.

According to an eighth aspect, an embodiment of this application further provides a first communication apparatus. The first communication apparatus includes a processor, configured to implement the method in the second aspect and the possible implementations of the second aspect. In a possible implementation, the processor implements the method by using a logic circuit. In another possible implementation, the processor implements the method by executing instructions.

Specifically, the processor is configured to: output a first handover request message, where the first handover request message is used to request a terminal to hand over from a first communication apparatus to a target communication apparatus, and the first handover request message includes execution information of a computing instance; receive a first handover acknowledgment message, where the first handover acknowledgment message is determined based on the execution information of the computing instance; and output first configuration information based on the first handover acknowledgment message.

In a possible implementation, the processor is further configured to: receive handover suggestion information sent by the terminal, and send the first handover request based on the computing handover suggestion information.

According to a ninth aspect, an embodiment of this application further provides a second communication apparatus. The second communication apparatus includes a processor, configured to implement the method in the third aspect and the possible implementations of the third aspect. In a possible implementation, the processor implements the method by using a logic circuit. In another possible implementation, the processor implements the method by executing instructions.

Specifically, the processor is configured to receive a first handover request message, where the first handover request message is used to request a terminal to hand over from a first communication apparatus to a target communication apparatus, and the first handover request message includes execution information of a computing instance; and is further configured to output a first handover acknowledgment message, where the first handover acknowledgment message is determined based on the execution information of the computing instance.

In a possible implementation, the communication apparatus is the target communication apparatus, the communication apparatus has a computing management function, and the processor is further configured to determine the first handover acknowledgment message based on the execution information of the computing instance and local computing power resource information.

In a possible implementation, the communication apparatus is a computing management function CMF entity, and the processor is further configured to: output a computing power resource obtaining request, where the computing power resource obtaining request is used to request computing power resource information of the target communication apparatus; and receive a computing power resource obtaining response sent by the target communication apparatus, where the computing power resource obtaining response includes the computing power resource information of the target communication apparatus.

In a possible implementation, the communication apparatus is a computing management function CMF entity, and the processor is further configured to: output a second handover request message, where the second handover request message includes the first handover request message and a cell identity of the first communication apparatus; receive a second handover acknowledgment message, where the second handover acknowledgment message is determined based on the execution information of the computing instance and local computing power resource information of the target communication apparatus; and is further configured to determine the first handover acknowledgment message based on the second handover acknowledgment message.

In still another possible implementation, the processor performs the method by using a logic circuit.

In still another possible implementation, the processor implements the method by executing instructions.

According to a tenth aspect, an embodiment of this application further provides a terminal. The terminal includes a processor, configured to implement the method in the fourth aspect and the possible implementations of the fourth aspect. In a possible implementation, the processor implements the method by using a logic circuit. In another possible implementation, the processor implements the method by executing instructions.

Specifically, the processor is configured to receive first configuration information, where the first configuration information is determined based on a first handover acknowledgment message, and the first handover acknowledgment message is determined based on execution information of a computing instance; and is further configured to: hand over from a first communication apparatus to a target communication apparatus based on the first configuration information, and output configuration complete information.

In a possible implementation, the processor is further configured to: output computing input information, and receive computing output information that is obtained by the target communication apparatus by performing computing based on the computing input information.

In a possible implementation, the processor is further configured to: output computing input information, and receive, from the target communication apparatus, computing output information that is obtained by the first communication apparatus by performing computing.

In a possible implementation, the processor outputs handover suggestion information, so that the first communication apparatus sends a first handover request to a second communication apparatus based on the computing handover suggestion information.

For the communication apparatus in any one of the fifth to the tenth aspects, the following possible implementations are further included.

In a possible implementation, the first handover acknowledgment message indicates to perform computing and connection handovers, or the first handover acknowledgment message indicates to perform a connection handover.

In a possible implementation, the execution information of the computing instance includes computing resource requirement information of the computing instance, and the first handover acknowledgment message is determined based on the computing resource requirement information of the computing instance and computing power resource information of the target communication apparatus.

Optionally, the computing resource requirement information includes a computing resource requirement level. Optionally, the computing resource requirement level may be represented by one or more of requirement levels of a computing resource container, a processor, storage, an internal memory, or an amount of electricity. The computing resource container may be a combination of one or more of resources such as a quantity of processors, a storage size, an internal memory size, and an amount of electricity.

In a possible implementation, the execution information of the computing instance further includes one or more of the following: cell identity information of the first communication apparatus, identification information of the terminal, execution progress information of the computing instance, input/output communication overheads information of the computing instance, or model size information of the computing instance.

In a possible implementation, when computing power resources of the target communication apparatus meet a computing resource requirement of the computing instance, the first handover acknowledgment message indicates to perform computing and connection handovers.

In a possible implementation, when computing power resources of the target communication apparatus meet a computing resource requirement of the computing instance, and communication overheads of a computing handover are less than or equal to a first threshold and/or an execution progress of the computing instance is less than or equal to a second threshold, the first handover acknowledgment message indicates to perform computing and connection handovers.

In a possible implementation, when computing power resources of the target communication apparatus meet a computing resource requirement of the computing instance, and the target communication apparatus can meet a computing QoS requirement, the first handover acknowledgment message indicates to perform computing and connection handovers.

In a possible implementation, the first handover acknowledgment message includes second configuration information and third configuration information. The second configuration information indicates connection configuration information of the terminal, and the third configuration information indicates a computing-related configuration of the terminal. The computing-related configuration of the terminal may include computing environment configuration information of the terminal and configuration information of the computing instance of the terminal.

In a possible implementation, the first configuration information includes the connection configuration information of the terminal and the computing-related configuration information of the terminal.

In a possible implementation, when computing power resources of the target communication apparatus do not meet a computing resource requirement of the computing instance, the first handover acknowledgment message indicates to perform a connection handover.

In a possible implementation, when communication overheads of a computing handover are greater than or equal to a first threshold, or an execution progress of the computing instance is greater than or equal to a second threshold, the first handover acknowledgment message indicates to perform a connection handover.

In a possible implementation, when the target communication apparatus cannot meet a computing QoS requirement, the first handover acknowledgment message indicates to perform a connection handover.

In a possible implementation, the first handover acknowledgment information includes second configuration information and fourth configuration information. The second configuration information is connection configuration information of the terminal, and the fourth configuration information is information about a connection configuration between the first communication apparatus and the target communication apparatus. Optionally, the fourth configuration information includes information about establishing a computing plane channel, and the computing plane channel is used to transmit computing-related input/output information.

In a possible implementation, the first configuration information includes the connection configuration information of the terminal.

In a possible implementation, the connection configuration information of the terminal includes one or more of the following: a random access preamble and computing bearer configuration information.

According to an eleventh aspect, an embodiment of this application further provides a communication apparatus. The communication apparatus includes a processor, configured to execute a computer program (or computer-executable instructions) stored in a memory. When the computer program (or the computer-executable instructions) is executed, the apparatus is enabled to perform the method in the second aspect and the possible implementations of the second aspect, or the apparatus is enabled to perform the method in the third aspect and the possible implementations of the third aspect.

In a possible implementation, the processor and the memory are integrated together.

In another possible implementation, the memory is located outside the communication apparatus.

The communication apparatus further includes a communication interface. The communication interface is used by the communication apparatus to communicate with another device, for example, send or receive data and/or signals. For example, the communication interface may be a transceiver, a circuit, a bus, a module, or a communication interface of another type.

According to a twelfth aspect, an embodiment of this application further provides a communication apparatus. The communication apparatus includes a processor, configured to execute a computer program (or computer-executable instructions) stored in a memory. When the computer program (or the computer-executable instructions) is executed, the apparatus is enabled to perform the method in the fourth aspect and the possible implementations of the fourth aspect.

In a possible implementation, the processor and the memory are integrated together.

In another possible implementation, the memory is located outside the communication apparatus.

The communication apparatus further includes a communication interface. The communication interface is used by the communication apparatus to communicate with another device, for example, send or receive data and/or signals. For example, the communication interface may be a transceiver, a circuit, a bus, a module, or a communication interface of another type.

According to a thirteenth aspect, an embodiment of this application further provides a first communication apparatus, configured to perform the method in the second aspect and the possible implementations of the second aspect.

According to a fourteenth aspect, an embodiment of this application further provides a second communication apparatus, configured to perform the method in the third aspect and the possible implementations of the third aspect.

According to a fifteenth aspect, an embodiment of this application further provides a terminal, configured to perform the method in the fourth aspect and the possible implementations of the fourth aspect.

For beneficial effects brought by the communication apparatuses in the fifth to fifteenth aspects and the possible implementations of the fifth to fifteenth aspects, refer to the beneficial effects of the method in the first aspect and the possible implementations of the first aspect. Details are not described herein again.

According to a sixteenth aspect, an embodiment of this application further provides a computer-readable storage medium. The computer-readable storage medium stores a computer program (or computer-executable instructions). The computer program (or the computer-executable instructions) is executed by a processor, so that some or all steps of the method in any one of the second aspect, the third aspect, or the possible implementations of the second aspect or the third aspect are performed.

According to a seventeenth aspect, an embodiment of this application further provides a computer-readable storage medium. The computer-readable storage medium stores a computer program (or computer-executable instructions). The computer program (or the computer-executable instructions) is executed by a processor, so that some or all steps of the method in any one of the fourth aspect or the possible implementations of the fourth aspect are performed.

According to an eighteenth aspect, an embodiment of this application further provides a computer program product including computer-executable instructions. When the computer program product runs, some or all steps of the method in any one of the second aspect, the third aspect, or the possible implementations of the second aspect or the third aspect are performed.

According to a nineteenth aspect, an embodiment of this application further provides a computer program product including computer-executable instructions. When the computer program product runs, some or all steps of the method in any one of the fourth aspect or the possible implementations of the fourth aspect are performed.

According to a twentieth aspect, an embodiment of this application further provides a computer program including computer-executable instructions. When the computer program is run, some or all steps of the method in any one of the second aspect, the third aspect, or the possible implementations of the second aspect or the third aspect are performed.

According to a twenty-first aspect, an embodiment of this application further provides a computer program including computer-executable instructions. When the computer program is run, some or all steps of the method in any one of the fourth aspect or the possible implementations of the fourth aspect are performed.

According to a twenty-second aspect, an embodiment of this application further provides a chip system. The chip system includes a processor and may further include a memory, and is configured to implement the method in any one of the second aspect, the third aspect, the fourth aspect, or the possible implementations of the second aspect, the third aspect, or the fourth aspect. The chip system may include a chip, or may include a chip and another discrete device.

According to a twenty-third aspect, an embodiment of this application further provides a communication system. The communication system includes the first communication apparatus provided in the fifth aspect, the eighth aspect, and the possible implementations of the fifth aspect and the eighth aspect, the second communication apparatus provided in the sixth aspect, the ninth aspect, and the possible implementations of the sixth aspect and the ninth aspect, and the terminal provided in the seventh aspect, the tenth aspect, and the possible implementations of the seventh aspect and the tenth aspect.

### BRIEF DESCRIPTION OF DRAWINGS

The following describes some accompanying drawings in embodiments of this application.
FIG. 1 is a diagram of a communication system to which an embodiment of this application is applicable;
FIG. 2 is a diagram of a network architecture;
FIG. 3 is a diagram of a communication architecture according to an embodiment of this application;
FIG. 4A is a diagram of a protocol stack according to an embodiment of this application;
FIG. 4B is a diagram of another protocol stack according to an embodiment of this application;
FIG. 5A is a diagram of a communication architecture according to an embodiment of this application;
FIG. 5B is a diagram of another communication architecture according to an embodiment of this application;
FIG. 6 is a diagram of interaction in a handover method according to an embodiment of this application;
FIG. 7 is a diagram of interaction in a connection and computing handover method according to an embodiment of this application;
FIG. 8 is a diagram of interaction in another connection and computing handover method according to an embodiment of this application;
FIG. 9 is a diagram of interaction in a connection handover method according to an embodiment of this application;
FIG. 10 is a diagram of interaction in another connection handover method according to an embodiment of this application;
FIG. 11 is a diagram of interaction in a handover method according to an embodiment of this application;
FIG. 12A is a diagram of a neural network according to an embodiment of this application;
FIG. 12B is a diagram of an application scenario of split learning according to an embodiment of this application;
FIG. 13 is a diagram of a communication apparatus according to an embodiment of this application;
FIG. 14 is a diagram of a communication apparatus according to an embodiment of this application; and
FIG. 15 is a diagram of a communication apparatus according to an embodiment of this application.

### DESCRIPTION OF EMBODIMENTS

Embodiments of this application provide a wireless communication method and an apparatus, to ensure continuity of a computing task during a handover.

The following describes embodiments of this application with reference to accompanying drawings in embodiments of this application.

In this application, "/" represents "or". A term "and/or" describes only an association relationship for describing associated objects and represents that three relationships may exist. For example, B and/or C may represent the following three cases: Only B exists, both B and C exist, and only C exists. In the specification and claims of embodiments of this application, terms such as "first" and "second" are intended to distinguish between different objects, and are not intended to describe a particular order of the objects unless otherwise specified. For example, a first communication apparatus and a second communication apparatus are used to distinguish different communication apparatuses, and are not intended to describe a particular order of target objects. In embodiments of this application, words such as "example" or "for example" are used to indicate an example, an illustration, or a description, and any embodiment or solution described as "example" or "for example" in embodiments of this application should not be construed as being preferred or having more advantages over other embodiments or design solutions. In descriptions of embodiments of this application, unless otherwise specified, "a plurality of" means at least two. For example, a plurality of processing units mean at least two processing units.

Technical solutions of this application can be applied to a cellular system related to the 3rd Generation Partnership Project (3rd generation partnership project, 3GPP), for example, a 4th generation (4th generation, 4G) communication system like a long term evolution (long term evolution, LTE) system, a 5th generation (5th generation, 5G) communication system like a new radio (new radio, NR) system, a communication system that supports convergence of a plurality of wireless technologies, or a communication system evolved after 5G.

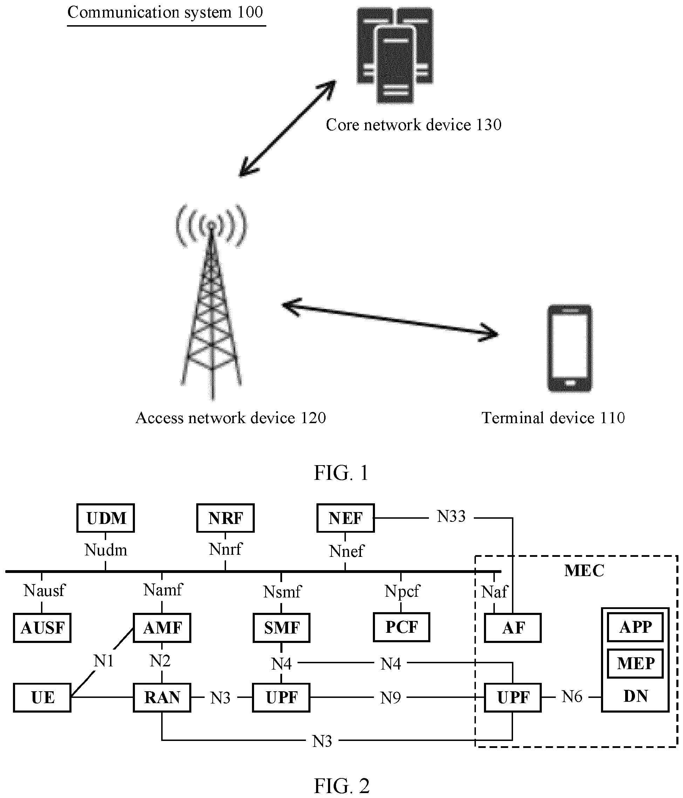

FIG. 1 shows an example of a communication system to which an embodiment of this application is applicable. As shown in FIG. 1, the communication system 100 includes at least one terminal 110 and at least one access network device 120, and may further include a core network device 130.

The terminal 110 mentioned in this embodiment of this application may be a device having a wireless transceiving function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle to everything, V2X), a virtual reality (virtual reality, VR) terminal device, an augmented reality (augmented reality, AR) terminal device, a wireless terminal in industrial control (industrial control), a wireless terminal in self-driving (self driving), a wireless terminal in a remote medical (remote medical) application, a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

In this embodiment of this application, an apparatus configured to implement a function of the terminal device may be a terminal device, or may be an apparatus that can support the terminal device in implementing the function, for example, a chip system. The apparatus may be mounted in the terminal device or used together with the terminal device. In this embodiment of this application, the chip system may include a chip, or may include a chip and another discrete device.

The access network device 120 is a device having a wireless transceiving function, and is configured to communicate with the terminal device. The access network device may be a node in a RAN, or may be referred to as a base station or a RAN node. The access network device may be an evolved NodeB (evolved NodeB, eNB, or eNodeB) in LTE, or may be a base station in a 5G network like a gNodeB (gNB), a base station in a public land mobile network (public land mobile network, PLMN) evolved after 5G, a broadband network gateway (broadband network gateway, BNG), an aggregation switch, a non-3rd Generation Partnership Project (3rd generation partnership project, 3GPP) access device, or the like. Optionally, network devices in this embodiment of this application may include various forms of base stations, for example, a macro base station, a micro base station (also referred to as a small cell), a relay station, a transmission and reception point (transmission and reception point, TRP), a transmission point (transmission point, TP), and devices that function as base stations in a mobile switching center, device-to-device (device-to-device, D2D), vehicle-to-everything (vehicle-everything, V2X), and machine-to-machine (machine-to-machine, M2M) communication. The network devices may further include a central unit (central unit, CU) and a distributed unit (distributed unit, DU) in a cloud radio access network (cloud radio access network, C-RAN) system, and a network device in a non-terrestrial network (non-terrestrial network, NTN) communication system. This is not specifically limited in embodiments of this application.

The access network device 120 may communicate and interact with the core network device 130, to provide a communication service for the terminal device. As a bearer network, a core network provides an interface to a data network (data network, DN), provides a communication connection, authentication, management, and policy control for a terminal, and completes a data service bearer.

The core network device 130 is, for example, a device in a core network (core network, CN) of the 5G network, and may include an access and mobility management function (access and mobility management function, AMF) network element, a session management function (session management function, SMF) network element, a user plane function (user plane function, UPF) network element, a unified data management (unified data manager, UDM) network element, a network exposure function (Network Exposure Function, NEF) network element, an application function (application function, AF) network element, a network slice selection function (network slice selection function, NSSF) network element, and the like. The AMF is used for access control and mobility management of the terminal, for example, registration management, connection management, mobility management, and reachability management. The SMF is used for session management, policy control, quality of service (quality of service, QoS), downlink data notification, and the like. The UPF is a gateway for communication between an operator network and a DN, and may be specifically a gateway, a server, a controller, a user plane function network element, or the like. The UPF may be disposed inside or outside the operator network. The UDM is responsible for storing a subscriber permanent identifier (subscriber permanent identifier, SUPI) of the operator network, registration information, a credential (credential), subscription data, and the like. The NEF is configured to expose an external interface of the operator network to a third party in a secure manner. The AF may be an application server, and is configured to provide an application layer service. The NSSF is configured to select a network slice instance that serves user equipment.

In this embodiment of this application, an apparatus configured to implement a function of the access network device may be an access network device, or may be an apparatus that can support the access network device in implementing the function, for example, a chip system. The apparatus may be mounted in the access network device or used together with the access network device. An apparatus configured to implement a function of the core network device may be a core network device, or may be an apparatus that can support the core network device in implementing the function, for example, a chip system. The apparatus may be mounted in the core network device or used together with the core network device.

As commercial deployment and industry applications of mobile communication networks emerge, convergence of computing power and wireless networks has become an important development trend. For MEC deployment, computing power is deployed in an area close to a terminal and the computing power is introduced to a radio access network. This meets the industry's requirements for real-time quality and data security to some extent. An actual deployment location of MEC in a wireless network is usually corresponding to the UPF network element of a 5G core network.

FIG. 2 is a diagram of a 5G system architecture. As shown in FIG. 2, UE is connected to an AMF through an N1 interface, the AMF is connected to a RAN node through an N2 interface, the RAN node is connected to UPFs (including an edge UPF) through N3 interfaces, the UPFs are connected to an SMF through N4 interfaces, the UPF is connected to the edge UPF through an N9 interface, a policy control function (policy control function, PCF) is connected to an AF through an N5 interface, and the AF is connected to an NEF through an N33 interface. Core network elements may further provide service-based interfaces. For example, an authentication service function (authentication server function, AUSF) provides a Nausf interface, a UDM provides a Nudm interface, the AMF provides a Namf interface, the SMF provides an Nsmf interface, a network repository function (network repository function, NRF) provides an Nnrf interface, the SMF provides the Nsmf interface, the NEF provides an Nnef interface, the PCF provides an Npcf interface, and the AF provides a Naf interface.

The edge UPF is also connected to a DN through N6, and the DN includes a mobile/multi-access edge platform (mobile/multi-access edge platform, MEP). The edge UPF implements a local breakout of services based on the N6 interface between the edge UPF and the DN, to implement local processing of the services and achieve acceleration effect. It can be learned from FIG. 2 that MEC is an invisible network element in the system architecture. An application of the MEC is to sink a processing location of service data from a remote data network (for example, a public cloud) to local MEC with reference to an existing local breakout mechanism for core network data. In other words, an application for processing service data is pushed from a physical deployment location to a location near a core network of a wireless network (for example, co-located with the UPF) as much as possible, or is further sunk to a location near an access network (for example, co-located with the RAN node). Service deployment related to computing power is implemented by a management plane. In terms of a logical architecture and a control management mechanism, communication and computing are still systems independent of each other. Consequently, there are problems such as a large adjustment delay and weak dynamic performance.

It can be learned from the foregoing descriptions that in a current network, a communication network and a computing part are relatively loosely coupled. This means that computing power does not provide a native capability for a network architecture, and is difficult to support a service in which computing and communication are deeply coupled. As a result, efficiency, deployment costs, security, privacy protection, and other aspects need to be further improved.

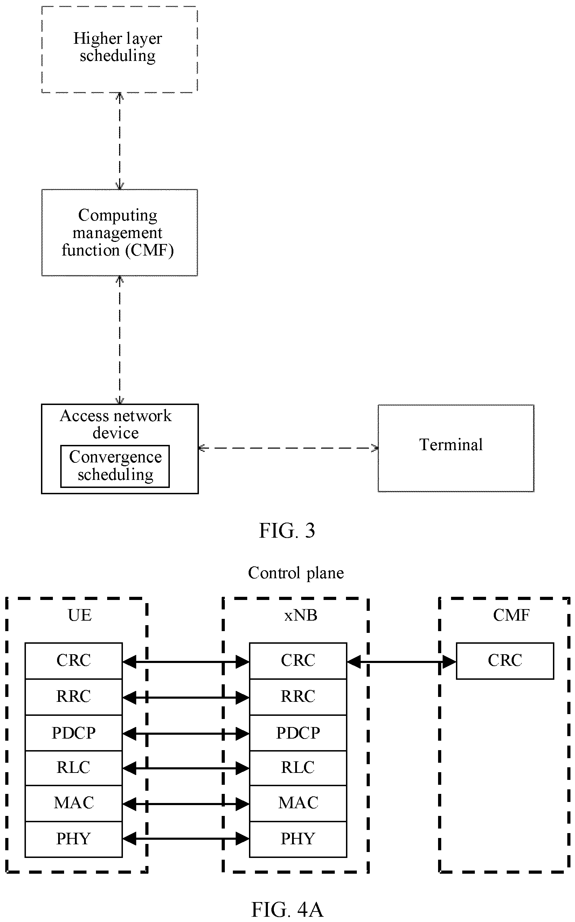

To resolve the foregoing problems, a computing management function (computing management function, CMF) is used in a communication architecture in embodiments of this application. FIG. 3 is a diagram of a communication architecture according to an embodiment of this application. As shown in FIG. 3, a CMF cooperates with an access network device to support convergence scheduling (convergence scheduling, CS) of computing power and communication. The CMF may be located in a core network, and is connected to the access network device through an NG_AP interface. Alternatively, the CMF may be integrated with the access network device. The CMF provides one or more of the following functions: computing power management and computing bearer management.

The access network device has a convergence scheduling function. The CS function includes one or more of the following: computing power status sensing and sensing result reporting, establishment, modification, suspension, restoration, and release of heterogeneous computing power resources of a terminal, computing power control, and computing bearer management.

Management/control granularities of the CMF and the access network device may be different. Optionally, time granularities are different. For example, a time granularity corresponding to the CMF may be a 10 ms level, a 100 ms level, or the like, and a time granularity corresponding to the access network device may be a millisecond level. Optionally, range granularities are different. The CMF may manage computing power of a plurality of cells within a municipal-level range, and the access network device may control computing power of one or more cells within a coverage area of the access network device.

In a possible implementation, to implement convergence of computing power and communication, in embodiments of this application, a computing resource control (computing resource control, CRC) layer is defined in a control plane protocol stack, to control computing resources. Specifically, the CRC is used for computing resource control, and is used to implement computing control in a CS function at a protocol layer, for example, computing power status sensing and sensing result reporting, establishment, modification, suspension, restoration, and release of heterogeneous computing power resources of a terminal, computing power control, and the like. FIG. 4A is a diagram of a control plane protocol stack according to an embodiment of this application. A CRC layer is added above a radio resource control (radio resource control, RRC) layer in the protocol stack. A terminal, an access network device, and a CMF each have a CRC layer. In a possible implementation, a CRC layer may be alternatively located above a packet data convergence protocol (packet data convergence protocol, PDCP) layer, and is parallel to an RRC layer.

When a transmit end or a receive end is a terminal or an access network device, a CRC message at the transmit end is sequentially processed by an RRC layer, a PDCP layer, a radio link control (radio link control, RLC) layer, a media access control (media access control, MAC) layer, and a physical layer, and is sent by the transmit end to the receive end at the physical layer. After a physical layer of the receive end receives the CRC message, the CRC message is sequentially processed by a MAC layer, an RLC layer, a PDCP layer, and an RRC layer, so that the receive end can parse the CRC message at a CRC layer. The CRC message may include computing-related data and/or control signaling. The terminal and the access network device may further exchange the CRC message with the CMF.

There may be no other protocol layers between the CRC layer and the RRC layer, or there may be other protocol layers between the CRC layer and the RRC layer, for example, a protocol layer introduced in the future. This is not limited. Optionally, the CRC layer may be parallel to a non-access stratum (non-access stratum, NAS).

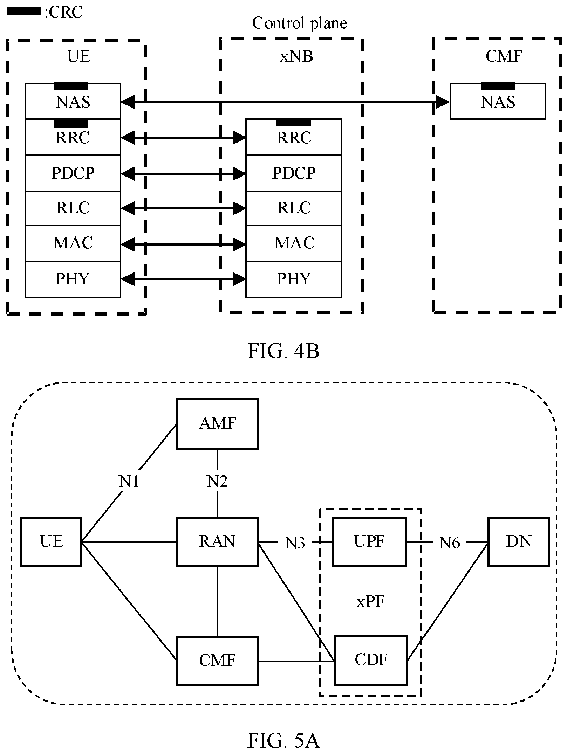

FIG. 5A is a diagram of a communication architecture corresponding to the protocol stack in FIG. 4A. As shown in FIG. 5A, the CMF may interact with all of the UE, a RAN, and a computing data function (computing data function, CDF) by using a CRC message. The CDF has a computing data function, and may be independently disposed or may be integrated with a UPF. The CDF may also be connected to the RAN and a DN.

In another possible implementation, in embodiments of this application, a CRC function is implemented by using an RRC layer and/or a NAS layer. The CRC function may include computing power status sensing and sensing result reporting, establishment, modification, suspension, restoration, and release of heterogeneous computing power resources of a terminal, computing power control, and the like. FIG. 4B is a diagram of a control plane protocol stack according to an embodiment of this application.

When the CRC function is implemented by using the RRC layer, specifically, the CRC function may be specifically implemented by defining a new RRC message, adding a new information element (information element, IE) to an RRC message, or adding a new RRC container (container). A terminal and an access network device may exchange CRC-related information by using an RRC message. For example, an RRC message for implementing the CRC function is sequentially processed by a PDCP layer, an RLC layer, a MAC layer, and a physical layer at a transmit end, and is sent by the transmit end to a receive end at the physical layer. After a physical layer of the receive end receives corresponding data/signaling, the data/signaling is sequentially processed by a MAC layer, an RLC layer, and a PDCP layer, so that the receive end can parse, at the RRC layer, the RRC message for implementing the CRC function.

When the CRC function is implemented by using the NAS layer, the CRC function may be specifically implemented by using a newly added NAS IE or NAS container. The terminal and a CMF may exchange a NAS message to implement the CRC function.

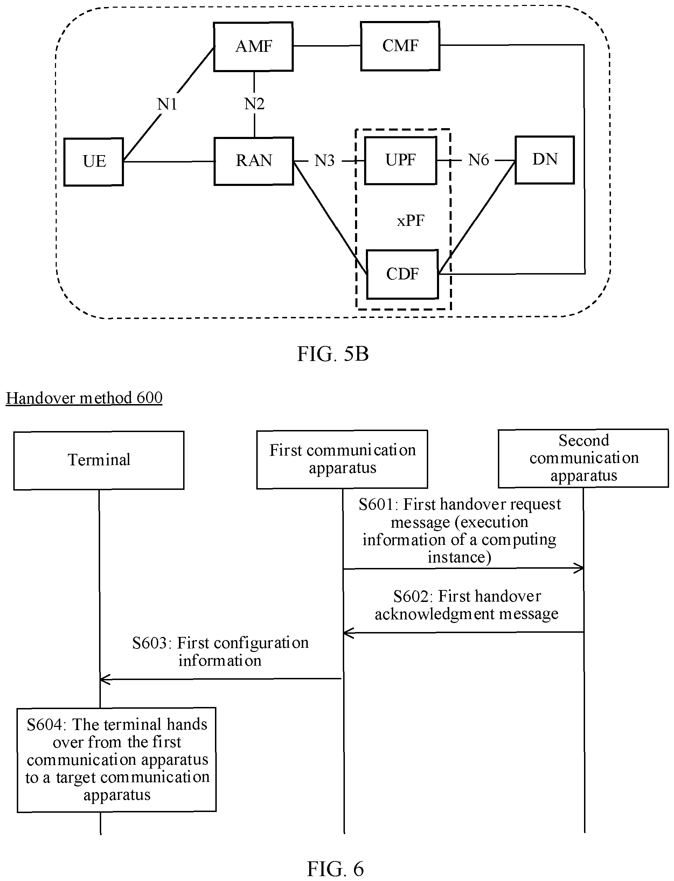

FIG. 5B is a diagram of a communication architecture corresponding to the protocol stack in FIG. 4B. As shown in FIG. 5B, the CMF is connected to an AMF and a CDF, and the CMF communicates with a RAN and the UE through the AMF based on the NAS layer. CRC-related information may be transmitted between the UE and the RAN by using an RRC message. The RAN is connected to a UPF and the CDF, and the UPF and the CDF are connected to a DN. The CDF may be independently disposed or may be integrated with the UPF.

The computing management function is used in the communication network architecture, so that computing power can be controlled and managed as a basic element of the network. This improves a response speed and dynamic performance, and can better support intelligent applications such as image recognition, integrated sensing and communication, intelligent interaction, holographic communication, immersive cloud, Internet of senses, and digital twin.

In addition, an existing mobility management mechanism possibly cannot ensure continuity of a computing task. For example, a network device provides a computing service for a terminal. When the terminal hands over from a source access network device to a target access network device, a computing service provided by the source access network device for the terminal may be interrupted. After the terminal is connected to the target access network device, the computing task needs to be restarted, affecting continuity of the computing task.

In this embodiment of this application, that a network device provides a computing service for a terminal may be that the terminal does not participate in computing, and the network device independently performs computing or jointly performs computing with another device, and provides a computing result for the terminal; or may be that the network device and the terminal jointly perform a computing task. For example, the network device and the terminal jointly perform computing to implement image recognition/classification based on split inference. When the terminal implements image classification, if computing power of the terminal is limited, the terminal may deploy first x layers of a neural network having N layers, use image data as an input of the first x layers to obtain an output (an intermediate inference result) of the first x layers, and send the output to the network device. The network device deploys last (N-x) layers of the neural network, and uses the output of the first x layers as an input of the last (N-x) layers for inference, to obtain an image classification result. For another example, the network device and the terminal jointly perform computing to control a robot or a factory device. For example, low-delay control with low computing complexity (a low computing power requirement) is implemented by the terminal locally, and delay-insensitive control with high computing complexity is implemented by the network device.

For instance, a user obtains an AR service by using the terminal, and computing related to the AR service is provided by a network device 1. For example, the computing related to the AR service may be implemented by using an artificial intelligence (artificial intelligence, AI) model. As the user moves, the terminal moves from a coverage area of the network device 1 to a coverage area of a network device 2. In the existing mobility management mechanism, a wireless connection of the terminal may be handed over from the network device 1 to the network device 2. However, the computing related to the AR service provided by the network device 1 for the terminal may be interrupted, and the terminal needs to request an AR service from the network device 2 again. In addition, computing resources of the network device 2 may not meet a computing resource requirement of the AR service, and the network device 2 cannot provide the AR service for the user, affecting user experience.

To resolve the foregoing problems, an embodiment of this application provides a handover method, to ensure continuity of a computing task in a handover process.

Terms in embodiments of this application are first interpreted.

### 1. Computing instance (computing instance):

The computing instance is a computing unit or configuration related to a usage manner of computing resources. The computing resources include a storage resource, an internal-memory resource, computing power, an amount of electricity, and the like. The computing instance uses the computing resources to provide a computing service. Computing is a process of converting "one or more input values" into "one or more results". The computing service may include signal processing or numerical computing. When the computing service is implemented through AI, the computing instance is related to an Al model, an Al model segmentation location, and a computational amount like a quantity of local iterations of the AI model.

### 2. Executor:

The executor may also be referred to as a computing power executor, and may configure an execution environment for a computing instance, in other words, provide computing resources for the computing instance. For example, as shown in FIG. 3, an executor may be disposed in a terminal or an access network device.

The terminal and the network device may create or select a computing instance according to a computing requirement, and execute the computing instance. Different computing instances may be corresponding to different computing power, and may also need different computing resources. For example, the terminal and the network device may jointly execute a computing instance, to implement distributed learning such as split learning and federated learning. For another example, the network device may execute a computing instance to provide an inference service for the terminal, and the terminal obtains an inference result. FIG. 6 is a diagram of interaction in a handover method 600 according to an embodiment of this application. In the handover method 600, a first communication apparatus sends a first handover request message including execution information of a computing instance to a second communication apparatus, the second communication apparatus returns a first handover acknowledgment message determined based on the execution information of the computing instance, and the first communication apparatus sends first configuration information to a terminal based on the first handover acknowledgment message, so that the terminal hands over from the first communication apparatus to a target communication apparatus based on the first configuration information, to ensure continuity of a computing task in a handover process.

This embodiment of this application relates to the terminal, the first communication apparatus, the second communication apparatus, and the target communication apparatus. The first communication apparatus may be a source access network device, the target communication apparatus may be a target access network device, and the second communication apparatus may be a target access network device or a computing management function. A network device (for example, the source access network device or the target access network device) has a computing capability, and can provide a computing service for the terminal. The terminal may participate in computing and jointly implement the computing task with the network device, or may not participate in computing and receive a computing result provided by the network device. The second communication apparatus has a computing management function, and can implement computing scheduling, management, and the like.

The following describes specific content of the handover method 600.

S601: The first communication apparatus sends the first handover request message to the second communication apparatus, and correspondingly the second communication apparatus receives the first handover request message.

The first handover request message is used to request the terminal to hand over from the first communication apparatus to the target communication apparatus, and the first handover request message includes the execution information of the computing instance.

In a possible implementation, the execution information of the computing instance includes computing resource requirement information of the computing instance. Optionally, a computing resource requirement level may be represented by a requirement of a computing resource container, where the computing resource container may be a combination of one or more of resources such as a quantity of processors, a storage size, an internal memory size, and an amount of electricity. Alternatively, a computing resource requirement level may be represented by one or more of requirement levels of a processor, storage, an internal memory, or an amount of electricity. For example, the computing resource requirement level may be represented by using one central processing unit (central processing unit, CPU) time slice as a minimum unit, or may be represented by using a computing power value as a unit, like operations per second (operations per second, OPS), trillion operations per second (trillion operations per second, TOPS), or floating-point operations per second (floating-point operations per second, FLOPS).

In a possible implementation, the execution information of the computing instance further includes identification information used to identify the source access network device, the terminal, and the like, so that the second communication apparatus learns a sender of the handover request and the terminal involved in the handover request. Specifically, the execution information of the computing instance includes one or more of the following: cell identity information of the first communication apparatus and identification information of the terminal. The cell identity information of the first communication apparatus indicates identity information of a cell that performs the computing instance. The identification information of the terminal may be specifically a cell radio network temporary identity (cell radio network temporary identifier, C-RNTI), an international mobile equipment identity (international mobile equipment identity, IMEI), an international mobile subscriber identity (international mobile subscriber identity, IMSI), or a globally unique temporary identity (globally unique temporary identity, GUTI). This is not limited in this application.

In a possible implementation, the execution information of the computing instance further includes execution progress information of the computing instance that indicates a current execution progress of the computing instance. The second communication apparatus may select a handover policy based on the execution progress information, for example, determine whether to perform a computing handover. Optionally, the execution progress information of the computing instance may be represented by a percentage.

During a computing handover, the first communication apparatus transmits computing migration information to the target communication apparatus, where the computing information may include related configuration information of the computing instance, so that the target communication apparatus performs configuration based on the related configuration information of the computing instance, to provide a computing service for the terminal.

In a possible implementation, the execution information of the computing instance further includes communication overheads information for transmitting information related to the computing instance. The second communication apparatus may select a handover policy based on the information, for example, determine whether to perform a computing handover. Specifically, the execution information of the computing instance may include one or more of the following: input/output communication overheads information of the computing instance and model size information of the computing instance. The input/output communication overheads information of the computing instance indicates overheads for transmitting computing input/output information. Optionally, the overheads may be represented by a quantity of bytes occupied after a computing-related parameter is quantized. The model size information of the computing instance indicates a parameter quantity of a model used by the computing instance. Optionally, the parameter quantity may be represented a quantity of bytes occupied after a model parameter is quantized.

In a possible implementation, the execution information of the computing instance may include index information, and there is a mapping relationship between the index information and a value of the parameter included in the execution information of the computing instance. The mapping relationship may be agreed by a transmit end and a receive end, or may be predefined in a protocol. For example, two bits are used to represent a computing resource requirement level: 00 represents 1 TOPS, 01 represents 5 TOPS, 10 represents 10 TOPS, 11 represents 20 TOPS, and so on. For another example, two bits are used to represent a computing progress: 00 represents 25%, 01 represents 50%, 10 represents 75%, 11 represents 99%, and so on. For still another example, three bits are used to represent a quantity of bytes: 000 represents 1 MB (megabyte), 001 represents 5 MB, 010 represents 10 MB, 011 represents 25 MB, 100 indicates 50 MB, 101 indicates 75 MB, 110 indicates 100 MB, 111 indicates 200 MB, and so on. The foregoing is merely examples for description, and specific mapping values are not limited in this application. In this implementation, an actual value is indicated by using an index value and a corresponding mapping relationship, so that signaling overheads can be reduced.

In a possible implementation, the first handover request message further includes target cell identity information, so that the terminal hands over to a correct target communication apparatus.

In a possible implementation, the first handover request message further includes one or more of the following: context information of the terminal and historical information of the terminal, so that the target communication apparatus prepares for a connection handover based on the first handover request message. The context information of the terminal includes one or more of the following: capability information of the terminal, an aggregate maximum bit rate (Aggregate Maximum Bit Rate), protocol data unit (protocol data unit, PDU) session resource information, an RRC context, and location information. The historical information of the terminal includes information about a cell that the terminal accesses before accessing a target cell, so that the target communication apparatus stores the historical information of the terminal for a subsequent handover.

In a possible implementation, before sending the first handover request message, the first communication apparatus determines to initiate a handover. Specifically, the first communication apparatus determines, based on a measurement report of the terminal, to initiate a handover. The measurement report may include a measurement result of a current serving cell corresponding to the first communication apparatus, and may further include a measurement result of a neighboring cell of the current serving cell. The neighboring cell includes a cell corresponding to the second communication apparatus. The measurement result may include one or more of the following: reference signal received power (reference signal received power, RSRP), reference signal received quality (reference signal received quality, RSRQ), and a reference signal-signal to interference plus noise ratio (reference signal-signal to interference plus noise ratio, RS-SINR). The handover is initiated based on the measurement result of the terminal, so that quality of communication between the terminal and the network device can be ensured.

In a possible implementation, the first communication apparatus determines, based on a measurement report of the terminal and local computing resources, to initiate a handover. For example, when the local computing resources of the first communication apparatus are limited, and a measurement result of a neighboring cell satisfies a first condition, a handover is initiated. The first condition may be that the measurement result of the neighboring cell is higher than a measurement result of a current serving cell, the measurement result of the neighboring cell is higher than a sum of a measurement result of a current serving cell and an offset value, or the measurement result of the neighboring cell is higher than a third threshold. In this implementation, computing quality of service can be ensured while the quality of communication is ensured.

Optionally, when the local computing resources of the first communication apparatus are limited, but there is no neighboring cell that satisfies the first condition, the first communication apparatus may send computing-related configuration information to another network device without initiating a handover, so that the another network device and the first communication apparatus jointly provide a computing service for the terminal. In this way, computing load balancing is implemented and computing quality of service is ensured.

In a possible implementation, before sending the first handover request message, the first communication apparatus receives handover suggestion information sent by the terminal, and sends the first handover request message based on the handover suggestion information. Specifically, after receiving the handover suggestion information, the first communication apparatus selects a neighboring cell that satisfies the first condition, and sends the first handover request message to the second communication apparatus corresponding to the neighboring cell that satisfies the first condition.

Optionally, the terminal sends the handover suggestion information when a trigger event occurs. The trigger event may be that computing resources of the terminal are limited, current computing quality of service is lower than or equal to a fourth threshold, quality of communication between the terminal and the first communication apparatus is lower than or equal to a fifth threshold, or the like.

S602: The second communication apparatus sends the first handover acknowledgment message to the first communication apparatus, and correspondingly the first communication apparatus receives the first handover acknowledgment message, where the first handover acknowledgment message is determined based on the execution information of the computing instance.

Specifically, the second communication apparatus determines the handover policy based on the execution information of the computing instance in the first handover request message, where the handover policy includes performing computing and connection handovers, or performing only a connection handover.

In a possible implementation, the first handover acknowledgment message indicates to perform computing and connection handovers. The computing and connection handovers may mean that the handover process from the first communication apparatus to the target communication apparatus includes both a connection-related handover and a computing-related handover (or referred to as computing migration). To be specific, after the handover, the terminal establishes a communication connection to the target communication apparatus, and receives a computing service provided by the target access network device.

In a possible implementation, when the first handover acknowledgment message indicates to perform computing and connection handovers, the first handover acknowledgment message includes second configuration information and third configuration information. The second configuration information indicates connection configuration information of the terminal, and the third configuration information indicates a computing-related configuration of the terminal. Specifically, the third configuration information includes computing environment configuration information of the terminal. The computing environment configuration information includes one or more types of resource information such as a computing resource container, a processor, a memory, an internal memory, or an amount of electricity. Optionally, the third configuration information further includes configuration information of the computing instance of the terminal. The configuration information of the computing instance includes information related to the model used by the computing instance, such as a model configuration, a hyperparameter configuration, a model segmentation location, and a quantity of local iterations.

In another possible implementation, the first handover acknowledgment message indicates to perform a connection handover. The connection handover may mean that the handover process from the first communication apparatus to the target communication apparatus includes a connection handover. To be specific, after the handover, the terminal establishes a communication connection to the target communication apparatus, and receives, by using the target communication apparatus, a computing service provided by the first communication apparatus.

In a possible implementation, when the first handover acknowledgment message indicates to perform a connection handover, the first handover acknowledgment message includes second configuration information and fourth configuration information. The second configuration information is connection configuration information of the terminal, and the fourth configuration information is information about a connection configuration between the first communication apparatus and the target communication apparatus. Optionally, the fourth configuration information includes information about establishing a computing plane channel, and the computing plane channel is used to transmit the computing-related parameter.

In the foregoing possible implementations, the first handover acknowledgment message determined based on the execution information of the computing instance includes two handover policies: the computing and connection handovers or the connection handover. In other words, the second communication apparatus may select an appropriate handover policy based on the execution information of the computing instance, to ensure handover continuity and improve efficiency of providing a computing service by a network. The following describes in detail how the second communication apparatus determines the handover policy based on the execution information of the computing instance. Details are not described herein.

In still another possible implementation, the handover policy determined by the second communication apparatus based on the first handover request message is not to perform a handover, that is, the second communication apparatus rejects a handover. Then, the first handover acknowledgment message indicates a handover failure, and the first handover acknowledgment message in this case may also be referred to as a handover preparation failure message.

S603: The first communication apparatus sends the first configuration information to the terminal, and correspondingly the terminal receives the first configuration information.

Specifically, the first communication apparatus sends the first configuration information to the terminal based on the first handover acknowledgment message.

In a possible implementation, the first handover acknowledgment message includes the second configuration information and the third configuration information, that is, the first handover acknowledgment message indicates to perform computing and connection handovers. Correspondingly, the first configuration information includes the connection configuration of the terminal and the computing-related configuration of the terminal. Optionally, the first configuration information includes information about the second configuration information and information about the third configuration information. The information about the second configuration information and the information about the third configuration information may be the second configuration information and the third configuration information, or may be other information that has a same function as the second configuration information and the third configuration information. The first configuration information indicates the connection configuration of the terminal, and further indicates the computing-related configuration, so that the terminal can establish the communication connection to the target communication apparatus based on the first configuration information, and receive the computing service provided by the target communication apparatus.

In a possible implementation, the first handover acknowledgment message includes the second configuration information and the fourth configuration information, that is, the first handover acknowledgment message indicates to perform a connection handover. Correspondingly, the first configuration information includes the connection configuration information of the terminal. Optionally, the first configuration information includes information about the second configuration information. The information about the second configuration information may be the second configuration information, or may be other information that has a same function as the second configuration information. The first configuration information indicates the connection configuration of the terminal, so that the terminal can establish the communication connection to the target communication apparatus based on the first configuration information, and receive, by using the target communication apparatus, the computing service provided by the first communication apparatus.

In a possible implementation, the first communication apparatus further establishes the computing plane channel between the first communication apparatus and the target communication apparatus based on the fourth configuration information, to transmit the computing-related parameter.

In a possible implementation, the first configuration information is carried in a CRC control message, that is, is corresponding to the protocol stack in FIG. 4A.

In a possible implementation, the first configuration information is carried in an RRC control message, that is, is corresponding to the protocol stack in FIG. 4B.

S604: The terminal hands over from the first communication apparatus to the target communication apparatus.

Specifically, the terminal hands over from the first communication apparatus to the target communication apparatus based on the first configuration information. The terminal establishes the communication connection to the target communication apparatus based on the information about the second configuration information included in the first configuration information.

In a possible implementation, the second configuration information includes random access-related information, for example, a preamble. The terminal performs random access based on the second configuration information, so that the terminal is connected to the target access network device, to achieve uplink synchronization. The random access may be contention-based random access, or may be non-contention-based random access. This is not limited in this application.

In a possible implementation, the second configuration information includes computing bearer configuration information, and the terminal may establish a computing bearer with the target access network device based on the computing bearer configuration information, to transmit computing-related data and signaling. Optionally, the computing bearer may include a computing data channel and/or a computing radio bearer.

In a possible implementation, when the handover policy is to perform computing and connection handovers, the terminal reconfigures a computing instance and an execution environment of the computing instance based on the computing-related configuration information included in the first configuration information, to jointly execute the computing instance with the target communication apparatus.

S605: (Not shown in the figure) The terminal sends configuration complete information to the target communication apparatus, and correspondingly the target communication apparatus receives the configuration complete information.

In a possible implementation, the configuration complete information is carried in an RRC reconfiguration complete information.

In a possible implementation, the configuration complete is carried in a CRC reconfiguration complete information.

After step S605, the terminal may interact with the target communication apparatus about a computing input/output. Specifically, the terminal sends the computing input to the target communication apparatus, and the target communication apparatus sends the computing output to the terminal.

In a possible implementation, after the computing and connection handovers are completed, the terminal sends the computing input to the target communication apparatus. The target communication apparatus receives the computing input, performs computing to obtain the computing output, and returns the computing output to the terminal. Correspondingly, the terminal receives the computing output.

In another possible implementation, after the connection handover is completed, the terminal sends the computing input to the target communication apparatus. The target communication apparatus receives the computing input, and forwards the computing input to the first communication apparatus. The first communication apparatus receives the computing input, performs computing to obtain the computing output, and returns the computing output to the target communication apparatus. After receiving the computing output, the target communication apparatus forwards the computing output to the terminal. Correspondingly, the terminal receives the computing output.

In the method 600, the handover request message includes the execution information of the computing instance, so that the second communication apparatus determines a handover policy, and returns a handover acknowledgment message to the first communication apparatus based on different policies. The first communication apparatus sends configuration information to the terminal based on the handover acknowledgment message, so that the terminal establishes a connection to the target communication apparatus based on the configuration information. This can ensure continuity of a computing service under different handover policies.

The following provides a detailed description of determining, by the second communication apparatus, the handover policy based on the execution information of the computing instance.

In a possible implementation, the execution information of the computing instance includes the computing resource requirement information of the computing instance, and the first handover acknowledgment message is determined based on the computing resource requirement information of the computing instance and computing power resource information of the target communication apparatus.

Specifically, the second communication apparatus determines the handover policy based on the computing resource requirement information of the computing instance and the computing power resource information of the target communication apparatus. Optionally, the second communication apparatus may be the computing management function CMF mentioned above, or may be the target communication apparatus.

Optionally, the second communication apparatus is the target communication apparatus. The second communication apparatus determines the computing power resource information of the target communication apparatus (that is, the second communication apparatus), and determines the handover policy based on the computing power resource information of the target communication apparatus and the computing resource requirement information of the computing instance, to determine the first handover acknowledgment message.

Optionally, the second communication apparatus is the computing management function. After receiving the first handover request message, the second communication apparatus sends a second handover request message to the target communication apparatus, where the second handover request message includes the first handover request message and a cell identity of the first communication apparatus. The target communication apparatus determines the handover policy based on the computing power resource information of the target communication apparatus and the computing resource requirement information of the computing instance, to determine a second handover acknowledgment message. The second communication apparatus receives the second handover acknowledgment message sent by the target communication apparatus, and determines, based on the second handover acknowledgment message, the first handover acknowledgment message sent to the first communication apparatus. Optionally, the second communication apparatus may further transparently transmit the second handover acknowledgment message, that is, the first handover acknowledgment message is the same as the second handover acknowledgment message.

Optionally, the second communication apparatus is the computing management function. After receiving the first handover request message, the second communication apparatus sends a computing power obtaining request message to the target communication apparatus, to obtain the computing power resource information of the target communication apparatus. The second communication apparatus receives a computing power obtaining response message sent by the target communication apparatus, where the computing power obtaining response message includes the computing power resource information of the target communication apparatus. The second communication apparatus determines the handover policy based on the computing power resource information of the target communication apparatus and the computing resource requirement information of the computing instance, to determine the first handover acknowledgment message.

Specifically, when computing power resources of the target communication apparatus meet a computing resource requirement of the computing instance, the handover policy is to perform computing and connection handovers, and correspondingly the first handover acknowledgment message indicates to perform computing and connection handovers. When computing power resources of the target communication apparatus do not meet a computing resource requirement of the computing instance, the handover policy is to perform only a connection handover, and correspondingly the first handover acknowledgment message indicates to perform a connection handover.

In this implementation, computing and connection handovers are performed only when the computing power resources of the target communication apparatus meet the computing resource requirement of the computing instance. This avoids a computing interruption due to limited computing power resources of the target communication apparatus. When the computing power resources of the target communication apparatus do not meet the computing resource requirement of the computing instance, a connection handover is performed. After the handover, the terminal may establish the communication connection to the target communication apparatus, and receive, by using the target communication apparatus, the computing service provided by the source access network device, to ensure computing continuity in case of the limited computing power resources.

In another possible implementation, when computing power resources of the target communication apparatus meet a computing resource requirement of the computing instance, and the target communication apparatus can meet a computing QoS requirement, the handover policy is to perform computing and connection handovers, and correspondingly the first handover acknowledgment message indicates to perform computing and connection handovers. When computing power resources of the target communication apparatus meet a computing resource requirement of the computing instance, but the target communication apparatus cannot meet a QoS requirement, the handover policy is to perform only a connection handover, and correspondingly the first handover acknowledgment message indicates to perform a connection handover.

The QoS requirement may be specifically computing precision, an end-to-end delay for performing computing, or the like. The end-to-end delay includes a computing delay and a transmission delay.

In this implementation, on a premise that the computing power resources of the target communication apparatus meet the requirement, the handover policy is further determined based on the computing QoS, to meet a requirement for the computing quality of service while computing continuity is ensured.

In still another possible implementation, when computing power resources of the target communication apparatus meet a computing resource requirement of the computing instance, and communication overheads of a computing handover are less than or equal to a first threshold and/or an execution progress of the computing instance is less than or equal to a second threshold, the handover policy is to perform computing and connection handovers, and correspondingly the first handover acknowledgment message indicates to perform computing and connection handovers. When communication overheads of a computing handover are greater than or equal to a first threshold, or an execution progress of the computing instance is greater than or equal to a second threshold, the handover policy is to perform only a connection handover, and correspondingly the first handover acknowledgment message indicates to perform a connection handover.

When the communication overheads of the computing handover are equal to the first threshold, the handover policy may be to perform computing and connection handovers, or may be to perform a connection handover. When the execution progress of the computing instance is equal to the second threshold, the handover policy may be to perform computing and connection handovers, or may be to perform a connection handover. This is not limited in this application.

The communication overheads of the computing handover are determined based on one or more of the following: the input/output communication overheads information of the computing instance and the model size information of the computing instance.

In this implementation, on a premise that computing power of the target communication apparatus meets the requirement, the handover policy is further determined based on the communication overheads of the computing handover and/or the execution progress of the computing instance. When the communication overheads of the computing handover are excessively high, or when execution of the current computing instance is to be completed, a connection handover is performed. The first communication apparatus provides the computing service, and the terminal obtains the computing service of the first communication apparatus through the communication connection to the target communication apparatus. This reduces signaling overheads and a handover delay, and improves computing service efficiency.

The following separately describes specific processes of two handover methods when the second communication apparatus is the computing management function, and specific processes of two handover methods when the second communication apparatus is the target communication apparatus.

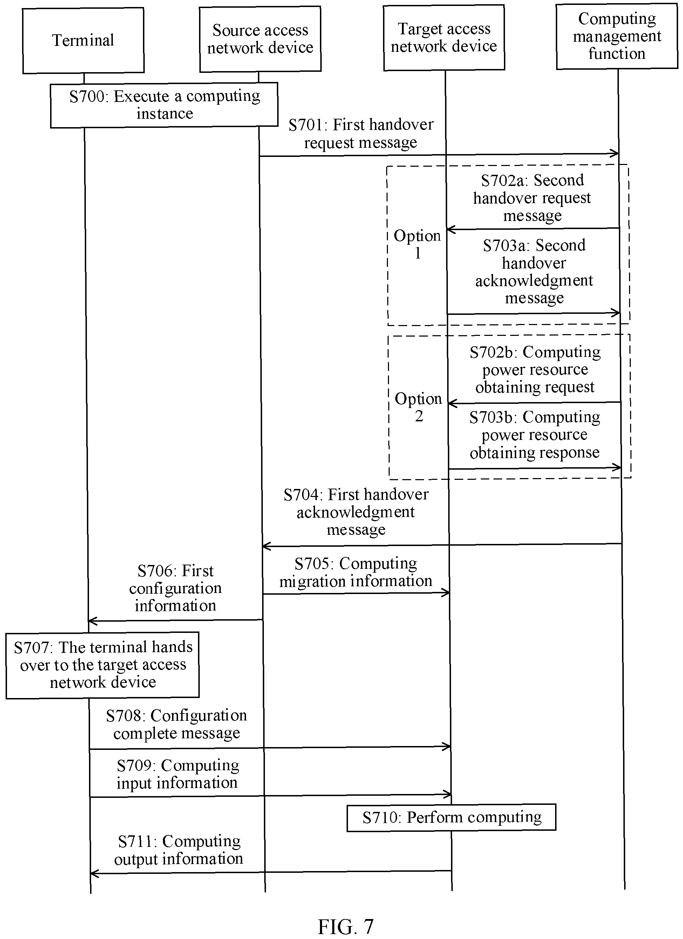

FIG. 7 is a diagram of interaction in a handover method according to an embodiment of this application. The method relates to a terminal, a source access network device, a target access network device, and a computing management function. The source access network device is the foregoing first communication apparatus, and the computing management function is the foregoing second communication apparatus. In the method shown in FIG. 7, the computing management function determines, based on a first handover request message, that a handover policy is to perform computing and connection handovers. In a handover process, the source access network device sends configuration information of a computing instance to the target access network device, so that the target access network device provides a computing service for the terminal, to ensure computing continuity.

The method shown in FIG. 7 specifically includes the following steps.

S700: The terminal and the source access network device execute a computing instance.

Before the handover process starts, the terminal and the source access network device execute the computing instance. Optionally, the terminal receives a computing service provided by the source access network device, or the terminal and the source access network device jointly perform a computing task.

For example, the terminal sends a computing input to the source access network device by using a computing bearer with the source access network device. The source access network device performs computing to obtain a computing output, and returns the computing output to the terminal by using the computing bearer.

S701: The source access network device sends the first handover request to the computing management function, and correspondingly the computing management function receives the first handover request.

The first handover request is used to request the terminal to hand over from the source access network device to the target access network device, and the first handover request message includes execution information of the computing instance.

For specific content of S701, refer to related descriptions of step S601 in the method 600. Details are not described herein again.

The computing management function may determine the handover policy by using S702a and S703a or S702b and S703b.

S702a: The computing management function sends a second handover request message to the target access network device, and correspondingly the target access network device receives the second handover request message.

The second handover request message includes the first handover request message and a cell identity of the source access network device.

S703a: The target access network device sends a second handover acknowledgment message to the computing management function, and correspondingly the computing management function receives the second handover acknowledgment message.

Specifically, the target access network device determines the second handover acknowledgment message based on the execution information of the computing instance, and sends the second handover acknowledgment message to the computing management function. The second handover acknowledgment message indicates to perform computing and connection handovers. For specific content, refer to related descriptions of the computing and connection handovers in S602. Details are not described herein again.

For various possible implementations of determining the second handover acknowledgment message, refer to the foregoing related descriptions of "determining, by the second communication apparatus, the handover policy based on the execution information of the computing instance". Details are not described herein again.

The second handover acknowledgment message includes connection configuration information of the terminal and information about a connection configuration between the source access network device and the target access network device.

S702b: The computing management function sends a computing power resource obtaining request to the target access network device, and correspondingly the target access network device receives the computing power resource obtaining request.

The computing power resource obtaining request is used to request computing power resource information of the target access network device.

S703b: The target access network device sends a computing power resource obtaining response to the computing management function, and correspondingly the computing management function receives the computing power resource obtaining response.

The computing power resource obtaining response includes the computing power resource information of the target access network device.

The computing management function may determine the handover policy based on the computing power resource information of the target access network device and computing resource requirement information of the computing instance, to determine a first handover acknowledgment message. For various possible implementations of determining, by the computing management function, the first handover acknowledgment message, refer to the foregoing related descriptions of "determining, by the second communication apparatus, the handover policy based on the execution information of the computing instance". Details are not described herein again.

The second handover acknowledgment message further includes the connection configuration information of the terminal and the information about the connection configuration between the source access network device and the target access network device.

S704: The computing management function sends the first handover acknowledgment message to the source access network device, and correspondingly the source access network device receives the first handover acknowledgment message.

The first handover acknowledgment message indicates to perform computing and connection handovers. For specific content, refer to related descriptions of the computing and connection handovers in S602. Details are not described herein again.

In a possible implementation, the first handover acknowledgment message includes second configuration information and third configuration information. The second configuration information indicates the connection configuration of the terminal, and the third configuration information indicates a computing-related configuration of the terminal. The computing-related configuration may specifically include computing environment configuration information of the terminal and configuration information of the computing instance of the terminal.

S705: The source access network device sends computing migration information to the target access network device, and correspondingly the target access network device receives the computing migration information.

The source access network device sends the computing migration information to perform a computing handover, so that the target access network device can provide the computing service for the terminal. The computing migration information includes computing-related information of the source access network device. Specifically, the computing migration information includes the configuration information of the computing instance of the source access network device and computing environment configuration information corresponding to the source access network device.

In a possible implementation, the computing migration information is transmitted by using an X2/Xn interface between the source access network device and the target access network device.

S706: The source access network device sends first configuration information to the terminal, and correspondingly the terminal receives the first configuration information.

The first configuration information includes the connection configuration information of the terminal and computing-related configuration information of the terminal. The computing-related configuration information of the terminal includes the computing environment configuration information of the terminal and the configuration information of the computing instance of the terminal.

S707: The terminal hands over to the target access network device.

Specifically, the terminal hands over to the target access network device based on the received first configuration information.

In a possible implementation, the connection configuration information of the terminal includes random access-related information, for example, a preamble. The terminal performs random access based on the connection configuration information of the terminal, so that the terminal is connected to the target access network device, to achieve uplink synchronization. The random access may be contention-based random access, or may be non-contention-based random access. This is not limited in this application.

In a possible implementation, the connection configuration information of the terminal includes computing bearer configuration information, and the terminal may establish a computing bearer with the target access network device based on the computing bearer configuration information, to transmit computing-related data and signaling. In a possible implementation, the terminal further reconfigures a computing instance based on the computing-related configuration information of the terminal, to jointly execute the computing instance with the target access network device.

S708: The terminal sends a configuration complete information to the target access network device, and correspondingly the target access network device receives the configuration complete information.

For specific content, refer to related descriptions of step S605. Details are not described herein again.

S709: The terminal sends computing input information to the target access network device, and correspondingly the target access network device receives the computing input information.

In a possible implementation, the computing input information is sent by using the computing bearer between the terminal and the target access network device.

S710: The target access network device performs computing.

The target access network device performs computing based on the computing input information to obtain computing output information.

In a possible implementation, before performing the computing, the target access network device configures a computing instance based on the computing migration information received in step S705.

S711: The target access network device sends the computing output information to the terminal, and correspondingly the terminal receives the computing output information.

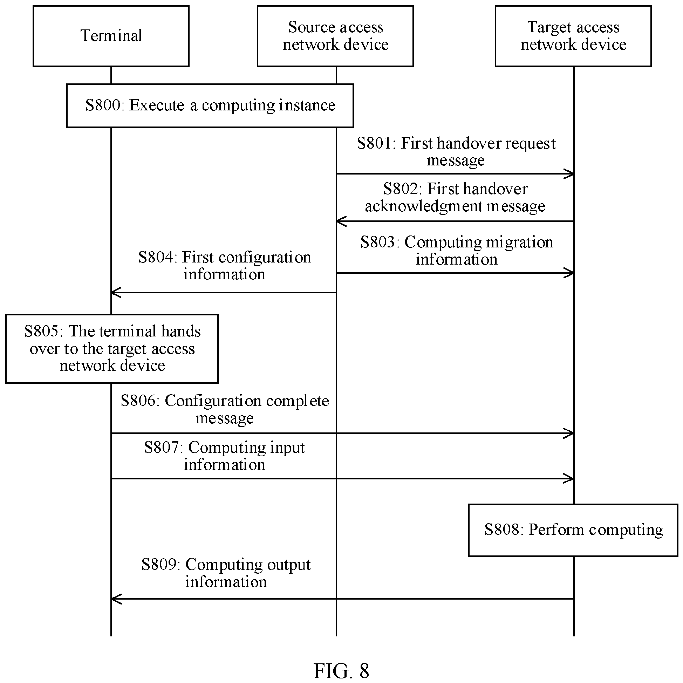

FIG. 8 is a diagram of interaction in a handover method according to an embodiment of this application. The method relates to a terminal, a source access network device, and a target access network device. The source access network device may be the foregoing first communication apparatus, and the target access network device may be the foregoing second communication apparatus. In the method shown in FIG. 8, the target access network device determines, based on a first handover request message, that a handover policy is to perform computing and connection handovers. In a handover process, the source access network device sends computing migration information to the target access network device, so that the target access network device provides a computing service for the terminal, to ensure computing continuity.

S800: The terminal and the source access network device execute a computing instance.

For specific content, refer to S700. Details are not described herein again.

S801: The source access network device sends the first handover request message to the target access network device, and correspondingly the target access network device receives the first handover request message.

The first handover request message is used to request the terminal to hand over from the source access network device to the target access network device, and the first handover request message includes execution information of the computing instance.

For specific content of S801, refer to related descriptions of step S601 in the method 600. Details are not described herein again.

S802: The target access network device sends a first handover acknowledgment message to the source access network device, and correspondingly the source access network device receives the first handover acknowledgment message.

Specifically, the target access network device determines the first handover acknowledgment message based on the execution information of the computing instance, and sends the first handover acknowledgment message to the source access network device. For various possible implementations of determining the first handover acknowledgment message, refer to the foregoing related descriptions of "determining, by the second communication apparatus, the handover policy based on the execution information of the computing instance". Details are not described herein again.

The first handover acknowledgment message indicates to perform computing and connection handovers. For specific content, refer to related descriptions of the computing and connection handovers in S602. Details are not described herein again.

In a possible implementation, the first handover acknowledgment message includes second configuration information and third configuration information. The second configuration information indicates a connection configuration of the terminal, and the third configuration information indicates a computing-related configuration of the terminal. The computing-related configuration may specifically include computing environment configuration information of the terminal and configuration information of the computing instance of the terminal. The computing environment configuration information includes one or more types of resource information such as a computing resource container, a processor, a memory, an internal memory, or an amount of electricity. The computing resource container includes combination information of resources such as a processor, a memory, an internal memory, or an amount of electricity. The configuration information of the computing instance includes information related to a model used by the computing instance, such as a model configuration, a hyperparameter configuration, a model segmentation location, and a quantity of local iterations.

S803: The source access network device sends the computing migration information to the target access network device, and correspondingly the target access network device receives the computing migration information.

S804: The source access network device sends first configuration information to the terminal, and correspondingly the terminal receives the first configuration information.

S805: The terminal hands over to the target access network device.

S806: The terminal sends a configuration complete information to the target access network device, and correspondingly the target access network device receives the configuration complete information.

S807: The terminal sends computing input information to the target access network device, and correspondingly the target access network device receives the computing input information.

S808: The target access network device performs computing.

S809: The target access network device sends the computing output information to the terminal, and correspondingly the terminal receives the computing output information.

Steps S803 to S809 are respectively the same as steps S705 to S711. Details are not described herein again.

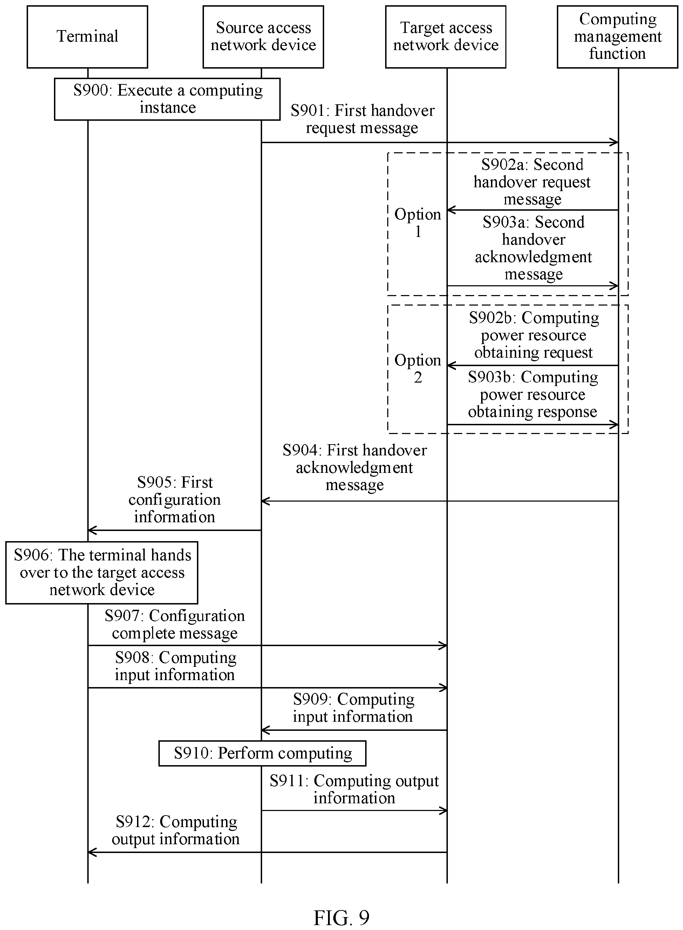

FIG. 9 is a diagram of interaction in a handover method according to an embodiment of this application. The method relates to a terminal, a source access network device, a target access network device, and a computing management function. The source access network device is the foregoing first communication apparatus, and the computing management function is the foregoing second communication apparatus. In the method shown in FIG. 9, the computing management function determines, based on a first handover request message, that a handover policy is to perform a connection handover, so that the terminal continues receiving, by using the target access network device, a computing service provided by a source access network. When a computing handover is difficult to implement because of high computing handover overheads or limited computing resources of the target access network device, computing continuity can still be ensured.

S900: The terminal and the source access network device execute a computing instance.

S901: The source access network device sends the first handover request to the computing management function, and correspondingly the computing management function receives the first handover request.

Steps S900 and S901 are respectively the same as steps S700 and S701. Details are not described herein again.

The computing management function may determine the handover policy by using S902a and S903a or S902b and S903b. S902a: The computing management function sends a second handover request message to the target access network device, and correspondingly the target access network device receives the second handover request message.

The second handover request message includes execution information of the computing instance and an identifier of the source access network device.

In a possible implementation, the computing management function forwards the first handover request sent by the source access network device, that is, the first handover request message and the second handover request message are a same message.

In another possible implementation, the computing management function performs local processing based on a parameter included in the first handover request message, to determine the second handover request message.

S903a: The target access network device sends a second handover acknowledgment message to the computing management function, and correspondingly the computing management function receives the second handover acknowledgment message.

Specifically, the target access network device determines the second handover acknowledgment message based on the execution information of the computing instance, and sends the second handover acknowledgment message to the computing management function. The second handover acknowledgment message indicates to perform a connection handover. For specific content, refer to related descriptions of the connection handover in S602. Details are not described herein again.

For various possible implementations of determining the second handover acknowledgment message, refer to the foregoing related descriptions of "determining, by the second communication apparatus, the handover policy based on the execution information of the computing instance". Details are not described herein again.

The second handover acknowledgment message includes connection configuration information of the terminal and information about a connection configuration between the source access network device and the target access network device.

S902b: The computing management function sends a computing power resource obtaining request to the target access network device, and correspondingly the target access network device receives the computing power resource obtaining request.

The computing power resource obtaining request is used to request computing power resource information of the target access network device.

S903b: The target access network device sends a computing power resource obtaining response to the computing management function, and correspondingly the computing management function receives the computing power resource obtaining response.

The computing power resource obtaining response includes the computing power resource information of the target access network device.

The computing management function may determine the handover policy based on the computing power resource information of the target access network device and computing resource requirement information of the computing instance, to determine a first handover acknowledgment message. In a possible implementation, the first handover acknowledgment message indicates to perform a connection handover.

For various possible implementations of determining, by the computing management function, the first handover acknowledgment message, refer to the foregoing related descriptions of "determining, by the second communication apparatus, the handover policy based on the execution information of the computing instance". Details are not described herein again.

S904: The computing management function sends the first handover acknowledgment message to the source access network device, and correspondingly the source access network device receives the first handover acknowledgment message.

The first handover acknowledgment message indicates to perform a connection handover. For specific content, refer to related descriptions of the connection handover in S602. Details are not described herein again.

In a possible implementation, the first handover acknowledgment message includes second configuration information and fourth configuration information. The second configuration information is connection configuration information of the terminal, and the fourth configuration information is information about a connection configuration between the source access network device and the target access network device. The fourth configuration information may include information about establishing a computing plane channel between the source access network device and the target access network device.

The source access network device may establish the computing plane channel between the source access network device and the target access network device based on the received fourth configuration information.

S905: The source access network device sends first configuration information to the terminal, and correspondingly the terminal receives the first configuration information.

Specifically, the source access network device sends the first configuration information to the terminal based on the first handover acknowledgment message. The first configuration information indicates a configuration for performing a connection handover, and the first configuration information may include the connection configuration information of the terminal.

S906: The terminal hands over to the target access network device.

Specifically, the terminal hands over to the target access network device based on the received second configuration information.

In a possible implementation, the second configuration information includes random access-related information, for example, a preamble. The terminal performs random access based on the second configuration information, so that the terminal is connected to the target access network device, to achieve uplink synchronization. The random access may be contention-based random access, or may be non-contention-based random access. This is not limited in this application.

In a possible implementation, the second configuration information includes computing bearer configuration information, and the terminal may establish a computing bearer with the target access network device based on the computing bearer configuration information, to transmit computing-related data and signaling.

S907: The terminal sends a configuration complete information to the target access network device, and correspondingly the target access network device receives the configuration complete information.

For specific content, refer to related descriptions of step S605. Details are not described herein again.

S908: The terminal sends computing input information to the target access network device, and correspondingly the target access network device receives the computing input information.

In a possible implementation, the terminal transmits the computing input information by using the computing bearer between the terminal and the target access network device.

S909: The target access network device sends the computing input information to the source access network device, and correspondingly the source access network device receives the computing input information.

In a possible implementation, the target access network device transmits the computing input information through the computing plane channel configured based on the fourth configuration information.

S908 and S909 describe a process in which the target access network device forwards, to the source access network device, the computing input information received from the terminal. Optionally, the target access network device receives first computing input information from the terminal, and sends second computing input information to a source target device. The second computing input information and the first computing input information may be same information, that is, the target access network device transparently transmits the computing input information from the terminal device. Alternatively, the second computing input information may be information obtained by processing the first computing input information by the target access network device.

S910: The source access network device performs computing.

The target access network device performs computing based on the computing input information to obtain computing output information.

S911: The source access network device sends the computing output information to the target access network device, and correspondingly the target access network device receives the computing output information.

In a possible implementation, the target access network device transmits the computing input information through the computing plane channel configured based on the fourth configuration information.

S912: The target access network device sends the computing output information to the terminal, and correspondingly the terminal receives the computing output information.

In a possible implementation, the target access network device transmits the computing input information by using the computing bearer between the target access network device and the terminal.

S911 and S912 describe a process in which the target access network device forwards, to the terminal, the computing output information received from the source access network device. Optionally, the target access network device receives first computing output information from the source access network device, and sends second computing output information to the terminal. The second computing output information and the first computing output information may be same information, that is, the target access network device transparently transmits the computing output information from the source access network device. Alternatively, the second computing output information may be information obtained by processing the first computing output information by the target access network device.

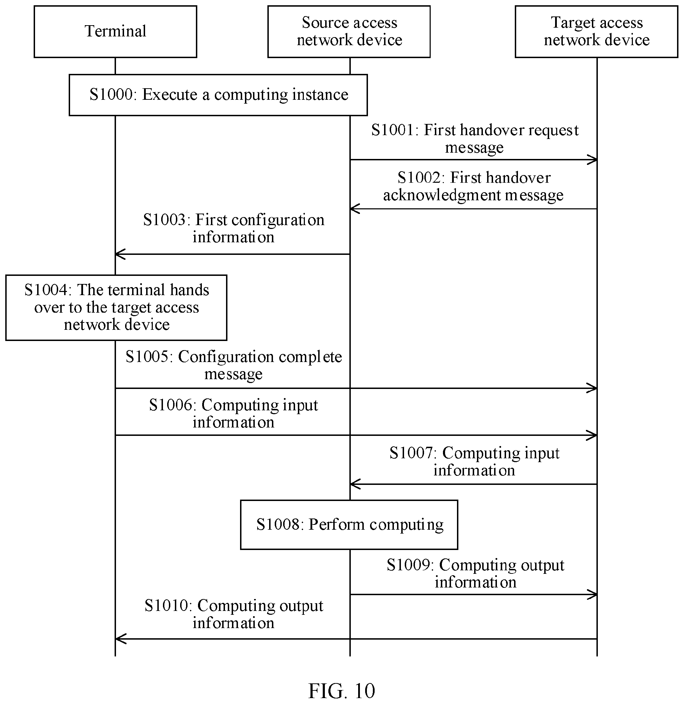

FIG. 10 is a diagram of interaction in a handover method according to an embodiment of this application. The method relates to a terminal, a source access network device, and a target access network device. The source access network device is the foregoing first communication apparatus, and the target access network device is the foregoing second communication apparatus. In the method shown in FIG. 10, a computing management function determines, based on a first handover request message, that a handover policy is to perform a connection handover, so that the terminal continues receiving, by using the target access network device, a computing service provided by a source access network. When a computing handover is difficult to implement because of high computing handover overheads or limited computing resources of the target access network device, computing continuity can still be ensured.

S 1000: The terminal and the source access network device execute a computing instance.

For specific content, refer to S700. Details are not described herein again.

S1001: The source access network device sends the first handover request message to the target access network device, and correspondingly the target access network device receives the first handover request message.

The first handover request message is used to request the terminal to hand over from the source access network device to the target access network device, and the first handover request message includes execution information of the computing instance.

For specific content of S1001, refer to related descriptions of step S601 in the method 600. Details are not described herein again.

S 1002: The target access network device sends a first handover acknowledgment message to the source access network device, and correspondingly the source access network device receives the first handover acknowledgment message.

Specifically, the target access network device determines the first handover acknowledgment message based on the execution information of the computing instance, and sends the first handover acknowledgment message to the source access network device. For various possible implementations of determining the first handover acknowledgment message, refer to the foregoing related descriptions of "determining, by the second communication apparatus, the handover policy based on the execution information of the computing instance". Details are not described herein again.

The first handover acknowledgment message indicates to perform a connection handover. For specific content, refer to related descriptions of the connection handover in S602. Details are not described herein again.

In a possible implementation, the first handover acknowledgment message includes second configuration information and fourth configuration information. The second configuration information is connection configuration information of the terminal, and the fourth configuration information is information about a connection configuration between the source access network device and the target access network device. The fourth configuration information may include information about establishing a computing plane channel between the source access network device and the target access network device.

In a possible implementation, the source access network device establishes the computing plane channel between the source access network device and the target access network device based on the received fourth configuration information.

S1003: The source access network device sends first configuration information to the terminal, and correspondingly the terminal receives the first configuration information.

Specifically, the source access network device sends the first configuration information to the terminal based on the first handover acknowledgment message. The first configuration information indicates a configuration for performing a connection handover, and the first configuration information may include the connection configuration information of the terminal.

S1004: The terminal hands over to the target access network device. Specifically, the terminal hands over to the target access network device based on the received second configuration information.

S1005: The terminal sends a configuration complete information to the target access network device, and correspondingly the target access network device receives the configuration complete information.

S1006: The terminal sends computing input information to the target access network device, and correspondingly the target access network device receives the computing input information.

S1007: The target access network device sends the computing input information to the source access network device, and correspondingly the source access network device receives the computing input information.

S1008: The source access network device performs computing.

S1009: The source access network device sends the computing output information to the target access network device, and correspondingly the target access network device receives the computing output information.

S1010: The target access network device sends the computing output information to the terminal, and correspondingly the terminal receives the computing output information.

Steps S1003 to S1010 are respectively the same as steps S905 to S912. Details are not described herein again.

The following uses a scenario in which a computing instance is used for split learning as an example for description. For example, the terminal and an access network device jointly execute a computing instance 1 to implement training or inference of a complete AI model. The AI model is segmented into a submodel 1 and a submodel 2. The terminal and the access network device configure the submodel 1 and the submodel 2, respectively.

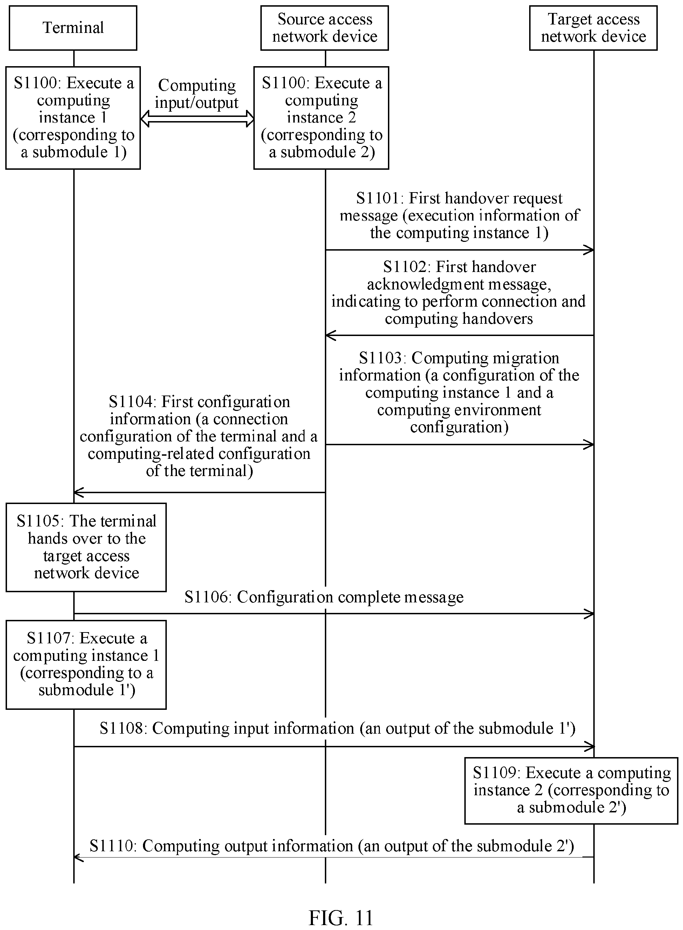

FIG. 11 is a diagram of interaction in another handover method according to an embodiment of this application. The method relates to a terminal, a source access network device, and a target access network device. The source access network device may be the foregoing first communication apparatus, and the target access network device may be the foregoing second communication apparatus. The target access network device determines, based on a first handover request message, that a handover policy is to perform computing and connection handovers. In a handover process, the source access network device sends computing migration information to the target access network device, so that the terminal and the target access network device jointly implement a computing task, to ensure computing continuity.

S 1100: The terminal executes a computing instance 1 and the source access network device executes a computing instance 2.

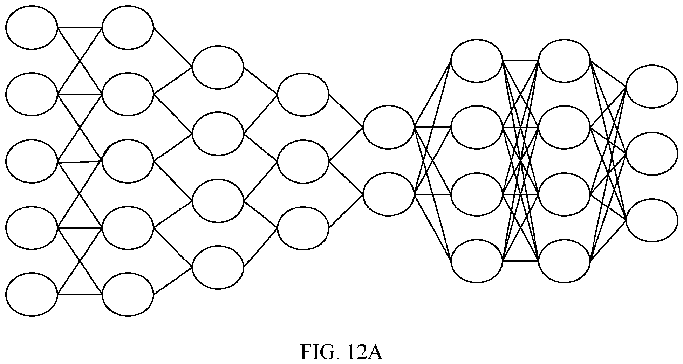

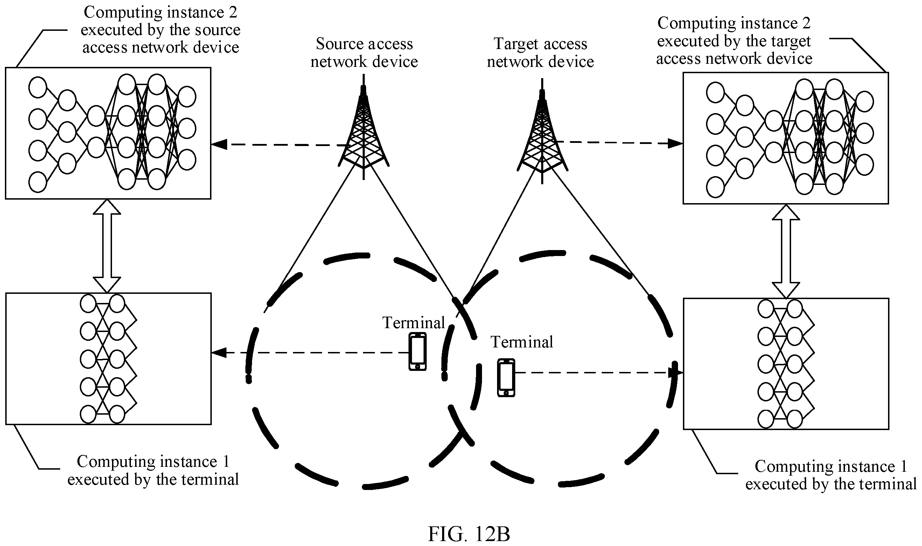

The computing instance 1 and the computing instance 2 are used to implement training or inference of a complete AI model. As shown in FIG. 12A, the complete AI model may be an 8-layer neural network model 1, and each layer includes one or more neurons. The terminal configures a submodel 1, and the source access network device configures a submodel 2. The submodel 1 and the submodel 2 are obtained through segmentation of a complete neural network. As shown in FIG. 12B, the terminal performs, by using the computing instance 1, training/inference on first two layers of the neural network model shown in FIG. 12A, the source access network device performs, by using the computing instance 2, training/inference on last six layers of the neural network model shown in FIG. 12A, and the terminal and the source access network device jointly implement training/inference of the 8-layer neural network model. The neural networks shown in FIG. 12A and FIG. 12B are merely used as examples. In practice, there may be more or fewer layers or neurons. This is not limited herein.

In a possible implementation, the AI model includes the submodel 1 and the submodel 2. Assuming that the AI model includes N layers, the submodel 1 includes first k layers of the AI model, the submodel 2 includes last (N-k) layers of the AI model. N is an integer greater than or equal to 2, and k is an integer greater than or equal to 0 and less than N. When k is 0, the computing instance 1 of the terminal may be used to collect data, and does not perform computing. The terminal performs inference on input data by using the submodel 1 and computing resources corresponding to the computing instance 1, to obtain an output of the submodel 1. The output of the submodel 1 can be understood as an intermediate inference result of the AI model. The terminal sends the output of the submodel 1 to the source access network device, and the source access network device performs inference by using the output of the submodel 1 as an input of the submodel 2, to obtain an output of the submodel 2. For example, in an inference scenario, the output of the submodel 2 may be used as an inference result, and the source access network device sends the inference result to the terminal. In a training scenario, a loss function may be computed based on the output of the submodel 2 to obtain gradient information, and the gradient information may be sent to the terminal. The gradient information is used to update the submodel 1 and the submodel 2.

In another possible implementation, the AI model includes the submodel 1 and the submodel 2. Assuming that the AI model includes N layers, the submodel 2 includes first k layers of the AI model, the submodel 1 includes last (N-k) layers of the AI model. N is an integer greater than or equal to 2, and k is a positive integer less than N. The source access network device performs inference on input data by using the submodel 2 and computing resources corresponding to the computing instance 2, to obtain an output of the submodel 2. The output of the submodel 2 can be understood as an intermediate inference result of the AI model. The source access network device sends the output of the submodel 2 to the terminal, and the terminal performs inference by using computing resources corresponding to the computing instance 1 and by using the output of the submodel 2 as an input of the submodel 2, to obtain an output of the submodel 1. For example, in an inference scenario, the output of the submodel 1 may be used as an inference result, and the terminal sends the inference result to the source access network device. In a training scenario, a loss function may be computed based on the output of the submodel 1 to obtain gradient information, and the gradient information may be sent to the source access network device. The gradient information is used to update the submodel 2 and the submodel 1.

In a possible implementation, computing-related input/output information is transmitted between the terminal and the source access network device by using a computing bearer. For example, the computing-related input/output information may include the output of the submodel 1, the output of the submodel 2, the inference results, the gradient information, and the like.

S1101: The source access network device sends the first handover request message to the target access network device, and correspondingly the target access network device receives the first handover request message.

The first handover request message is used to request the terminal to hand over from the source access network device to the target access network device, and the first handover request message includes execution information of the computing instance 2. The execution information of the computing instance includes computing resource requirement information of the computing instance 2. For example, a computing resource requirement of the computing instance 2 includes a size of a computing resource container or resources such as a quantity of processors, a size of storage space, an internal memory size, and an amount of electricity that are needed by the source access network device to configure the submodel 2.

In a possible implementation, the execution information of the computing instance further includes execution progress information of the computing instance that indicates a current execution progress of the computing instance. Optionally, the execution progress may be represented by using a percentage of a completed operation or a percentage of an uncompleted operation, or may be represented by using a quantity of neural network layers on which inference has completed. For example, as shown in FIG. 12B, the submodel 2 includes six layers, and the execution progress information may indicate that inference performed on first four layers has completed.

In a possible implementation, the execution information of the computing instance further includes communication overheads information for transmitting information related to the computing instance. The communication overheads information may include input/output communication overheads information of the computing instance and model size information of the computing instance, for example, a quantity of bytes occupied for transmitting the intermediate inference result (for example, the output of the submodel 1 or the output of the submodel 2), and a quantity of bytes occupied for transmitting a model parameter of the submodel 2.

For specific content of S 1101, refer to related descriptions of step S601 in the method 600. Details are not described herein again.

S 1102: The target access network device sends a first handover acknowledgment message to the source access network device, and correspondingly the source access network device receives the first handover acknowledgment message.

Specifically, the target access network device determines the first handover acknowledgment message based on the execution information of the computing instance, and sends the first handover acknowledgment message to the source access network device. The first handover acknowledgment message indicates to perform computing and connection handovers. For various possible implementations of determining the first handover acknowledgment message, refer to the foregoing related descriptions of "determining, by the second communication apparatus, the handover policy based on the execution information of the computing instance". Details are not described herein again.

For specific content, refer to related descriptions of the computing and connection handovers in S602. Details are not described herein again.

In a possible implementation, the first handover acknowledgment message includes second configuration information and third configuration information. The second configuration information indicates connection configuration information of the terminal, and the third configuration information indicates a computing-related configuration of the terminal. The computing-related configuration may specifically include computing environment configuration information of the terminal and configuration information of the computing instance of the terminal. The computing environment configuration information includes one or more types of resource information such as a computing resource container, a processor, a memory, an internal memory, or an amount of electricity. The computing resource container includes combination information of resources such as a processor, a memory, an internal memory, or an amount of electricity. The configuration information of the computing instance includes configurations related to the submodel 1, such as a model configuration, a hyperparameter configuration, a model segmentation location, and a quantity of local iterations.

S 1103: The source access network device sends the computing migration information to the target access network device, and correspondingly the target access network device receives the computing migration information.

The computing migration information includes computing-related information of the source access network device. The computing migration information includes configuration information of the computing instance 2 of the source access network device and computing environment configuration information corresponding to the source access network device. For example, the configuration information of the computing instance of the source access network device may include information related to the submodel 2, such as a model parameter and a model segmentation location of the submodel 2. For example, the computing environment configuration information includes computing resource information needed to configure the submodel 2.

The target access network device configures a computing environment of the computing instance 2 and a submodel based on the computing migration information by using corresponding computing resources. A submodel configured on the target access network device may be denoted as a submodel 2'. The submodel 2' and the submodel 2 may be corresponding to a same model segmentation location, that is, the submodel 2' and the submodel 2 have a same quantity of layers. For example, as shown in FIG. 12B, the target access network device configures the last six layers of the neural network model in FIG. 12A. The submodel 2' and the submodel 2 may be corresponding to different model segmentation locations, that is, the submodel 2' and the submodel 2 may have different quantities of layers. Correspondingly, the terminal reconfigures the submodel 1 to obtain a submodel 1'. For example, the target access network device configures last five layers of the neural network model in FIG. 12A, and the terminal configures first three layers of the neural network model in FIG. 12A.

S1104: The source access network device sends first configuration information to the terminal, and correspondingly the terminal receives the first configuration information.

The first configuration information includes the connection configuration information of the terminal and computing-related configuration information of the terminal. The computing-related configuration information of the terminal includes the computing environment configuration information of the terminal and the configuration information of the computing instance of the terminal.

S 1105: The terminal hands over to the target access network device.

Specifically, the terminal hands over to the target access network device based on the received first configuration information.

In a possible implementation, the connection configuration information of the terminal includes random access-related information, for example, a preamble. The terminal performs random access based on the connection configuration information of the terminal, so that the terminal is connected to the target access network device, to achieve uplink synchronization. The random access may be contention-based random access, or may be non-contention-based random access. This is not limited in this application.

In a possible implementation, the connection configuration information of the terminal includes computing bearer configuration information, and the terminal may establish a computing bearer with the target access network device based on the computing bearer configuration information, to transmit computing-related data and signaling.

In a possible implementation, the terminal further reconfigures the computing instance 1 based on the computing-related configuration information of the terminal, to jointly execute the computing task with the target access network device. Optionally, after the computing instance 1 is reconfigured, a submodel on the terminal may be denoted as the submodel 1'. The submodel 1' and the submodel 1 may be corresponding to a same model segmentation location, that is, the submodel 1' and the submodel 1 have a same quantity of layers. For example, as shown in FIG. 12B, the target access network device configures the first two layers of the neural network model in FIG. 12A. The submodel 1' and the submodel 1 may be corresponding to different model segmentation locations, that is, the submodel 1' and the submodel 1 may have different quantities of layers. Correspondingly, the terminal reconfigures the submodel 1 to obtain the submodel 1'. For example, the submodel 1' is corresponding to the first three layers of the neural network model in FIG. 12A, and correspondingly the submodel 2' configured on the target communication apparatus is corresponding to first five layers of the neural network model in FIG. 12A.

S1106: The terminal sends a configuration complete information to the target access network device, and correspondingly the target access network device receives the configuration complete information.

For specific content, refer to related descriptions of step S605. Details are not described herein again.

S1107: The terminal sends computing input information to the target access network device, and correspondingly the target access network device receives the computing input information.

Specifically, the computing input information includes an output of the submodel 1', that is, an intermediate inference result obtained by performing inference on input data by using the submodel 1'.

In a possible implementation, the computing input information is transmitted by using the computing bearer between the terminal and the target access network device.

S1108: The target access network device performs computing.

The target access network device executes the computing instance 2 configured based on the computing migration information, to obtain a computing output. Specifically, inference is performed by using the output of the submodel 1' as an input of the submodel 2', to obtain an output of the submodel 2'. For example, in an inference scenario, the output of the submodel 2' may be used as an inference result. In a training scenario, a loss function may be computed based on the output of the submodel 2 to obtain gradient information.

S1109: The target access network device sends computing output information to the terminal, and correspondingly the terminal receives the computing output information.

The computing output information is the output of the submodel 2', or information obtained based on the output of the submodel 2'. For example, in an inference scenario, the computing output information may be an inference result, or in a training scenario, the computing output information may be gradient information.

In a possible implementation, the computing output information is transmitted by using the computing bearer between the terminal and the target access network device.

To implement the functions in the methods provided in the foregoing embodiments of this application, the terminal, the first communication apparatus, and the second communication apparatus each may include a hardware structure and/or a software module, to implement the foregoing functions by using a hardware structure, a software module, or a combination of a hardware structure and a software module. Whether a function in the foregoing functions is performed by using a hardware structure, a software module, or a combination of a hardware structure and a software module depends on particular applications and design constraints of the technical solutions.

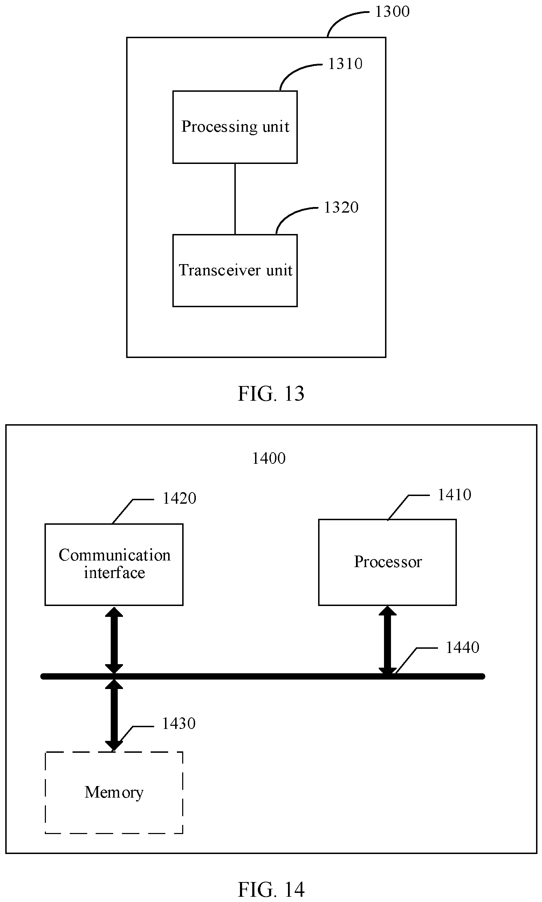

As shown in FIG. 13, an embodiment of this application provides a communication apparatus 1300. The communication apparatus 1300 may be a terminal or a network device (a source access network device, a target access network device, or a computing management function), may be an apparatus in a terminal device or a network device, or may be an apparatus that can be used together with a terminal device or a network device. In a possible implementation, the communication apparatus 1300 may include modules or units that are in one-to-one correspondence with the methods/operations/steps/actions performed by the terminal, the first communication apparatus, or the second communication apparatus in the foregoing method embodiments. The module or unit may be a hardware circuit or software, or may be implemented by a hardware circuit in combination with software. In a possible implementation, the communication apparatus 1300 may include a processing unit 1310 and a transceiver unit 1320. The processing unit 1310 may be configured to invoke the transceiver unit 1320 to perform a receiving function and/or a sending function.

When the communication apparatus 1300 is configured to perform operations performed by the first communication apparatus, the transceiver unit 1320 is configured to send a first handover request message, where the first handover request message is used to request the terminal to hand over from the first communication apparatus to a target communication apparatus, and the first handover request message includes execution information of a computing instance; is further configured to receive a first handover acknowledgment message, where the first handover acknowledgment message is determined based on the execution information of the computing instance; and is further configured to send first configuration information to the terminal based on the first handover acknowledgment message.

In a possible implementation, the transceiver unit 1320 is further configured to: receive handover suggestion information sent by the terminal, and send the first handover request based on the computing handover suggestion information.

When the communication apparatus 1300 is configured to perform operations performed by the second communication apparatus, the transceiver unit 1320 is configured to receive a first handover request message, where the first handover request message is used to request a terminal to hand over from the first communication apparatus to a target communication apparatus, and the first handover request message includes execution information of a computing instance; and is further configured to send a first handover acknowledgment message, where the first handover acknowledgment message is determined based on the execution information of the computing instance.

In a possible implementation, the processing unit 1310 is configured to determine the first handover acknowledgment message based on the execution information of the computing instance and local computing power resource information.

In a possible implementation, the transceiver unit 1320 is further configured to send a computing power resource obtaining request to the target communication apparatus, where the computing power resource obtaining request is used to request computing power resource information of the target communication apparatus; and the transceiver unit 1320 is further configured to receive a computing power resource obtaining response sent by the target communication apparatus, where the computing power resource obtaining response includes the computing power resource information of the target communication apparatus.

In a possible implementation, the transceiver unit 1320 is further configured to send a second handover request message to the target communication apparatus, where the second handover request message includes the first handover request message and a cell identity of the first communication apparatus; and the transceiver unit 1320 is further configured to receive a second handover acknowledgment message sent by the target communication apparatus, where the second handover acknowledgment message is determined based on the execution information of the computing instance and the local computing power resource information of the target communication apparatus. The processing unit 1310 is further configured to determine the first handover acknowledgment message based on the second handover acknowledgment message.

When the communication apparatus 1300 is configured to perform operations performed by the terminal, the transceiver unit 1320 is configured to receive first configuration information sent by the first communication apparatus, where the first configuration information is determined based on a first handover acknowledgment message, and the first handover acknowledgment message is determined based on execution information of a computing instance. The processing unit 1310 is configured to hand over from the first communication apparatus to a target communication apparatus based on the first configuration information. The transceiver unit 1320 is further configured to send configuration complete information to the target communication apparatus.

In a possible implementation, the transceiver unit 1320 is further configured to: send computing input information to the target communication apparatus, and receive computing output information that is obtained by the target communication apparatus by performing computing based on the computing input information.

In a possible implementation, the transceiver unit 1320 is further configured to: send computing input information to the target communication apparatus, and receive, from the target communication apparatus, computing output information that is obtained by the first communication apparatus by performing computing.

In a possible implementation, the transceiver unit 1320 is further configured to send handover suggestion information to the first communication apparatus, so that the first communication apparatus sends a first handover request to the second communication apparatus based on the computing handover suggestion information.

The transceiver unit 1320 is further configured to perform other receiving or sending steps or operations performed by the first communication apparatus, the second communication apparatus, or the terminal in the foregoing method embodiments. The processing unit 1310 may be further configured to perform corresponding steps or operations performed by the first communication apparatus, the second communication apparatus, or the terminal in the foregoing method embodiments other than receiving and sending. Details are not described herein again.

In addition, functional modules or units in embodiments of this application may be integrated into one processor, each of the modules or units may exist alone physically, or at least two modules or units may be integrated into one module or unit. The integrated module or unit may be implemented in a form of hardware, or may be implemented in a form of a software functional module. In a possible implementation, the processing unit 1310 may be a processor, and the transceiver unit 1320 may be a transceiver.

As shown in FIG. 14, an embodiment of this application further provides a communication apparatus 1400, configured to implement functions of the first communication apparatus, the second communication apparatus, or the terminal in the foregoing methods. The communication apparatus may be a terminal or a network device (a source access network device, a target access network device, or a computing management function), may be an apparatus (for example, a chip or a circuit) in a terminal or a network device, or may be an apparatus that can be used together with a terminal or a network device. The communication apparatus 1400 includes at least one processor 1410, and the communication apparatus 1400 may further include a communication interface 1420. In this embodiment of this application, the communication interface may be a transceiver, a circuit, a bus, a module, or another type of communication interface, and is configured to communicate with another device through a transmission medium. For example, the communication interface 1420 is used by an apparatus in the communication apparatus 1400 to communicate with another device.

The processor 1410 may perform functions performed by the processing unit 1310 in the communication apparatus 1300. The communication interface 1420 may be configured to perform functions performed by the transceiver unit 1320 in the communication apparatus 1300.

When the communication apparatus 1400 is configured to perform operations performed by the first communication apparatus, the communication interface 1420 is configured to send a first handover request message, where the first handover request message is used to request the terminal to hand over from the first communication apparatus to a target communication apparatus, and the first handover request message includes execution information of a computing instance; is further configured to receive a first handover acknowledgment message, where the first handover acknowledgment message is determined based on the execution information of the computing instance; and is further configured to send first configuration information to the terminal based on the first handover acknowledgment message.

When the communication apparatus 1400 is configured to perform operations performed by the second communication apparatus, the communication interface 1420 is configured to receive a first handover request message, where the first handover request message is used to request the terminal to hand over from the first communication apparatus to a target communication apparatus, and the first handover request message includes execution information of a computing instance; and is further configured to send a first handover acknowledgment message, where the first handover acknowledgment message is determined based on the execution information of the computing instance.

When the communication apparatus 1400 is configured to perform operations performed by the terminal, the communication interface 1420 is configured to receive first configuration information sent by the first communication apparatus, where the first configuration information is determined based on a first handover acknowledgment message, and the first handover acknowledgment message is determined based on execution information of a computing instance. The processor 1410 is configured to hand over from the first communication apparatus to a target communication apparatus based on the first configuration information. The communication interface 1420 is further configured to send configuration complete information to the target communication apparatus.

The communication apparatus 1400 may further include at least one memory 1430, configured to store program instructions and/or data. The memory 1430 is coupled to the processor 1410. Couplings in this embodiment of this application are indirect couplings or communication connections between apparatuses, units, or modules, may be in an electrical form, a mechanical from, or another form for information exchange between the apparatuses, the units, or the modules. The processor 1410 may perform an operation with the memory 1430 cooperatively. The processor 1410 may execute a computer program or instructions stored in the memory 1430. In a possible implementation, at least one of the at least one memory may be integrated with the processor. In another possible implementation, the memory 1430 is located outside the communication apparatus 1400.

A specific connection medium between the communication interface 1420, the processor 1410, and the memory 1430 is not limited in this embodiment of this application. In this embodiment of this application, the memory 1430, the processor 1410, and the communication interface 1420 are connected to each other through a bus 1440 in FIG. 14. The bus is represented by a bold line in FIG. 14. A connection manner between other components is merely an example for description, and imposes no limitation. The bus may be classified into an address bus, a data bus, a control bus, and the like. For ease of representation, the bus is represented by using only one bold line in FIG. 14, but this does not mean that there is only one bus or one type of bus.

In a possible implementation, the communication apparatus 1400 may be a chip system. In this embodiment of this application, the chip system may include a chip, or may include a chip and another discrete device.

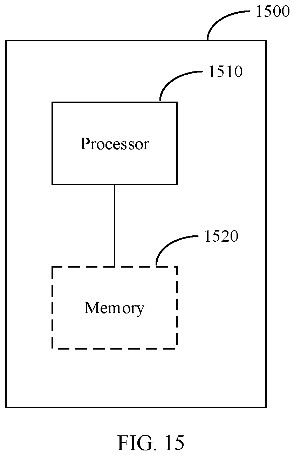

As shown in FIG. 15, an embodiment of this application further provides a communication apparatus 1500, configured to implement functions of the first communication apparatus, the second communication apparatus, or the terminal in the foregoing methods. The communication apparatus may be a terminal or a network device, may be an apparatus (for example, a chip or a circuit) in a terminal or a network device, or may be an apparatus that can be used together with a terminal or a network device. The communication apparatus includes a processor 1510. The processor is configured to implement some or all functions of the first communication apparatus, the second communication apparatus, or the terminal.

When the communication apparatus 1500 is configured to implement functions of the first communication apparatus, the processor 1510 is configured to: output a first handover request message, where the first handover request message is used to request the terminal to hand over from the first communication apparatus to a target communication apparatus, and the first handover request message includes execution information of a computing instance; receive a first handover acknowledgment message, where the first handover acknowledgment message is determined based on the execution information of the computing instance; and output first configuration information based on the first handover acknowledgment message.

When the communication apparatus 1500 is configured to implement functions of the second communication apparatus, the processor 1510 is configured to receive a first handover request message, where the first handover request message is used to request the terminal to hand over from the first communication apparatus to a target communication apparatus, and the first handover request message includes execution information of a computing instance; and the processor 1510 is further configured to output a first handover acknowledgment message, where the first handover acknowledgment message is determined based on the execution information of the computing instance.

When the communication apparatus 1500 is configured to implement functions of the terminal, the processor 1510 is configured to receive first configuration information, where the first configuration information is determined based on a first handover acknowledgment message, and the first handover acknowledgment message is determined based on execution information of a computing instance; and the processor 1510 is further configured to: hand over from the first communication apparatus to a target communication apparatus based on the first configuration information, and output configuration complete information.

In a possible implementation, the processor 1510 executes instructions stored in a memory 1520, to implement functions implemented by the first communication apparatus, the second communication apparatus, or the terminal. Optionally, the communication apparatus further includes the memory 1520. Optionally, the processor 1510 and the memory 1520 are integrated together. Optionally, the memory 1520 is outside the communication apparatus 1500.

In a possible implementation, the processor 1510 may be a logic circuit, and the processor 1510 inputs/outputs a message or signaling through an input/output interface (not shown in the figure). The logic circuit may be a signal processor, a chip, or another integrated circuit that can implement the methods in this application.

When the foregoing communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by another terminal or a network device to the terminal. Alternatively, the chip in the terminal outputs information to another module (for example, a radio frequency module or an antenna) in the terminal, where the information is sent by the terminal to another terminal or a network device.

When the foregoing communication apparatus is a chip used in a network device, the chip in the network device implements functions of the network device in the foregoing method embodiments. The chip in the network device receives information from another module (for example, a radio frequency module or an antenna) in the network device, where the information is sent by a terminal or another network device to the network device. Alternatively, the chip in the network device outputs information to another module (for example, a radio frequency module or an antenna) in the network device, where the information is sent by the network device to a terminal or another network device.

In embodiments of this application, the processor (for example, the processor 1410 or the processor 1510) may be one or more CPUs. When the processor is one CPU, the CPU may be a single-core CPU, or may be a multicore CPU. The processor may be a general-purpose processor, a digital signal processor, an application-specific integrated circuit, a field programmable gate array, another programmable logic device, a discrete gate, a transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly implemented by a hardware processor, or may be implemented by a combination of hardware in a processor and a software module.

In embodiments of this application, the memory (for example, the memory 1430 or the memory 1520) may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any other medium that can be used to carry or store a computer program in a form of instructions or a data structure and that is accessible by a computer, but is not limited thereto. Alternatively, the memory in embodiments of this application may be a circuit or any other apparatus that can implement a storage function, and is configured to store a computer program or instructions, and/or data.

An embodiment of this application further provides a computer-readable storage medium. The computer-readable storage medium stores a computer program or instructions. The computer program or instructions are executed by a computer (for example, a processor), to implement some or all steps of any method performed by any apparatus in embodiments of this application.

When the apparatus provided in this application is implemented in a form of a software functional unit and sold or used as an independent product, the apparatus may be stored in a computer-readable storage medium. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, an optical disc), a semiconductor medium (for example, a solid-state disk), or the like.

An embodiment of this application further provides a computer program product including a computer program or a group of instructions. When the computer program product runs on a computer, some or all steps of any method in the foregoing aspects are performed.

All or some of the methods in the foregoing embodiments may be implemented by using software, hardware, firmware, or any combination thereof. When software is used to implement the methods, all or some of the methods may be implemented in a form of a computer program product. The computer may be a general-purpose computer, a dedicated computer, a computer network, or another programmable apparatus. The computer instructions may be stored in a computer-readable storage medium, or may be transmitted from one computer-readable storage medium to another computer-readable storage medium.

This application further provides a chip or a chip system. The chip may include a processor. The chip may further include a memory (or a storage module) and/or a transceiver (or a communication module), or the chip is coupled to a memory (or a storage module) and/or a transceiver (or a communication module). The transceiver (or the communication module) may be configured to support the chip in performing wired and/or wireless communication. The memory (or the storage module) may be configured to store a program or a group of instructions. The processor may invoke the program or the group of instructions to implement operations performed by the terminal or the network device in any one of the foregoing method embodiments or the possible implementations of the method embodiments. The chip system may include the chip, or may include the chip and another discrete device, such as the memory (or the storage module) and/or the transceiver (or the communication module).

Based on a same concept as the foregoing method embodiments, this application further provides a communication system. The communication system may include the foregoing first communication apparatus, second communication apparatus, and terminal. The communication system may be configured to implement operations performed by the first communication apparatus, the second communication apparatus, or the terminal in any one of the foregoing method embodiments or the possible implementations of the method embodiments. For example, the communication system may be of the structure shown in FIG. 1.

In the foregoing embodiments, the descriptions of various embodiments have respective focuses. For a part that is not described in detail in an embodiment, refer to related descriptions in other embodiments.

The foregoing descriptions are merely some specific implementations of this application, but are not intended to limit the protection scope of this application. Any person skilled in the art may make other changes or modifications to these embodiments within the technical scope disclosed in this application. The appended claims are intended to be construed as including foregoing method embodiments and the changes and modifications that fall within the scope of this application. Therefore, the protection scope of this application shall be subject to the protection scope of the claims.

## Claims

1. A handover method, comprising:
sending, by a first communication apparatus, a first handover request message to a second communication apparatus, wherein the first handover request message is used to request a terminal to hand over from the first communication apparatus to a target communication apparatus, and the first handover request message comprises execution information of a computing instance;
receiving, by the first communication apparatus, a first handover acknowledgment message, wherein the first handover acknowledgment message is determined based on the execution information of the computing instance; and
sending, by the first communication apparatus, first configuration information to the terminal based on the first handover acknowledgment message.

2. The method according to claim 1, wherein the execution information of the computing instance comprises computing resource requirement information of the computing instance.

3. The method according to claim 1 or 2, wherein the first handover acknowledgment message indicates to perform computing and connection handovers.

4. The method according to any one of claims 1 to 3, wherein the first handover acknowledgment message comprises second configuration information and third configuration information; and
the second configuration information indicates a connection configuration of the terminal, and
the third configuration information indicates a computing-related configuration of the terminal.

5. The method according to claim 4, further comprising:
sending, by the first communication apparatus, computing migration information to the target communication apparatus, wherein the computing migration information comprises computing-related information of the first communication apparatus.

6. The method according to claim 4 or 5, wherein
the first configuration information comprises the connection configuration of the terminal and the computing-related configuration of the terminal.

7. The method according to claim 1 or 2, wherein the first handover acknowledgment message indicates to perform a connection handover.

8. The method according to claim 7, wherein the first handover acknowledgment message comprises second configuration information and fourth configuration information, the second configuration information indicates a connection configuration of the terminal, and the fourth configuration information indicates a connection configuration between the first communication apparatus and the target communication apparatus.

9. The method according to claim 7 or 8, further comprising:
receiving, by the first communication apparatus, a computing input sent by the second communication apparatus;
performing, by the first communication apparatus, computing based on the computing input to obtain a computing output; and
sending, by the first communication apparatus, the computing output to the second communication apparatus.

10. The method according to claim 8 or 9, wherein
the first configuration information comprises the connection configuration information of the terminal.

11. The method according to claim 10, wherein the connection configuration information of the terminal comprises one or more of the following: a random access preamble or computing bearer configuration information.

12. The method according to any one of claims 1 to 11, wherein the sending, by a first communication apparatus, a first handover request to a second communication apparatus comprises:
receiving, by the first communication apparatus, handover suggestion information sent by the terminal, and sending the first handover request to the second communication apparatus based on the computing handover suggestion information.

13. The method according to any one of claims 1 to 12, wherein the execution information of the computing instance further comprises one or more of the following: cell identity information of the first communication apparatus, identification information of the terminal, execution progress information of the computing instance, input/output communication overheads information of the computing instance, or model size information of the computing instance.

14. A handover method, comprising:
receiving, by a second communication apparatus, a first handover request message, wherein the first handover request message is used to request a terminal to hand over from a first communication apparatus to a target communication apparatus, and the first handover request message comprises execution information of a computing instance; and
sending, by the second communication apparatus, a first handover acknowledgment message, wherein the first handover acknowledgment message is determined based on the execution information of the computing instance.

15. The method according to claim 14, wherein the information about the computing instance comprises computing resource requirement information of the computing instance.

16. The method according to claim 15, wherein the first handover acknowledgment message is determined based on the computing resource requirement information of the computing instance and computing power resource information of the target communication apparatus.

17. The method according to claim 16, wherein the second communication apparatus is the target communication apparatus.

18. The method according to claim 16, wherein before the sending, by the second communication apparatus, a first handover acknowledgment message, the method further comprises:
sending, by the second communication apparatus, a computing power resource obtaining request to the target communication apparatus, wherein the computing power resource obtaining request is used to request the computing power resource information of the target communication apparatus; and
receiving, by the second communication apparatus, a computing power resource obtaining response sent by the target communication apparatus, wherein the computing power resource obtaining response comprises the computing power resource information of the target communication apparatus.

19. The method according to any one of claims 14 to 18, wherein
when computing power resources of the target communication apparatus meet a computing resource requirement of the computing instance, the first handover acknowledgment message indicates to perform computing and connection handovers; or
when computing power resources of the target communication apparatus meet a computing resource requirement of the computing instance, and communication overheads of the computing handover are less than or equal to a first threshold and/or an execution progress of the computing instance is less than or equal to a second threshold, the first handover acknowledgment message indicates to perform computing and connection handovers.

20. The method according to claim 19, wherein the handover acknowledgment information comprises second configuration information and third configuration information; and
the second configuration information indicates a connection configuration of the terminal, and the third configuration information indicates a computing-related configuration of the terminal.

21. The method according to claim 18 or 19, further comprising: receiving, by the second communication apparatus, computing migration information sent by the first communication apparatus, wherein the computing migration information comprises computing-related information of the first communication apparatus.

22. The method according to any one of claims 19 to 21, further comprising:
receiving, by the second communication apparatus, a computing input sent by the terminal;
performing, by the first communication apparatus, computing based on the computing input to obtain a computing output; and
sending, by the first communication apparatus, the computing output to the terminal.

23. The method according to any one of claims 14 to 18, wherein
when computing power resources of the target communication apparatus do not meet a computing resource requirement of the computing instance, communication overheads of a computing handover are greater than or equal to a first threshold, or an execution progress of the computing instance is greater than or equal to a second threshold, the first handover acknowledgment message indicates to perform a connection handover.

24. The method according to claim 23, wherein the first handover acknowledgment message comprises second configuration information and fourth configuration information, the second configuration information is connection configuration information of the terminal, and the fourth configuration information is information about a connection configuration between the first communication apparatus and the target communication apparatus.

25. The method according to any one of claims 14 to 24, wherein the information about the computing instance comprises one or more of the following: cell identity information of the first communication apparatus, identification information of the terminal, execution progress information of the computing instance, input/output communication overheads information of the computing instance, or model size information of the computing instance.

26. A handover method, comprising:
receiving, by a terminal, first configuration information sent by a first communication apparatus, wherein the first configuration information is determined based on a first handover acknowledgment message, and the first handover acknowledgment message is determined based on execution information of a computing instance;
handing over, by the terminal, from the first communication apparatus to a target communication apparatus based on the first configuration information; and
sending, by the terminal, configuration complete information to the target communication apparatus.

27. The method according to claim 26, wherein the first configuration information indicates configurations for performing a connection handover and a computing handover.

28. The method according to claim 26 or 27, wherein the first configuration information comprises connection configuration information of the terminal and a computing-related configuration of the terminal.

29. The method according to claim 26, wherein the first configuration information indicates a configuration for performing a connection handover.

30. The method according to claim 26 or 27, wherein the first configuration information comprises connection configuration information of the terminal.

31. The method according to claim 30, wherein the connection configuration information of the terminal comprises one or more of the following: a random access preamble and computing bearer configuration information.

32. The method according to any one of claims 26 to 31, wherein the terminal sends handover suggestion information to the first communication apparatus, so that the first communication apparatus sends a first handover request to a second communication apparatus based on the computing handover suggestion information.

33. A communication apparatus, comprising a module or a unit configured to perform the method according to any one of claims 1 to 13.

34. A communication apparatus, comprising a module or a unit configured to perform the method according to any one of claims 14 to 25.

35. A communication apparatus, comprising a module or a unit configured to perform the method according to any one of claims 26 to 32.

36. A communication apparatus, comprising a processor, wherein the processor is coupled to a memory, the memory stores instructions, and the processor is configured to execute the instructions, so that the communication apparatus performs the method according to any one of claims 1 to 13.

37. A communication apparatus, comprising a processor, wherein the processor is coupled to a memory, the memory stores instructions, and the processor is configured to execute the instructions, so that the communication apparatus performs the method according to any one of claims 14 to 25.

38. A communication apparatus, comprising a processor, wherein the processor is coupled to a memory, the memory stores instructions, and the processor is configured to execute the instructions, so that the communication apparatus performs the method according to any one of claims 26 to 32.

39. A computer-readable storage medium, comprising a computer program or instructions, wherein when the computer program or instructions are executed on a computer, the method according to any one of claims 1 to 13 is performed, the method according to any one of claims 14 to 25 is performed, or the method according to any one of claims 26 to 32 is performed.

40. A computer program product comprising instructions, wherein when the computer program product is executed on a computer, the method according to any one of claims 1 to 13 is performed, the method according to any one of claims 14 to 25 is performed, or the method according to any one of claims 26 to 32 is performed.

41. A communication system, comprising the communication apparatus according to claim 33 and the communication apparatus according to claim 34.

42. The communication system according to claim 41, further comprising the communication apparatus according to claim 35.
